# EUROPEAN PATENT SPECIFICATION

(11) **EP 2 050 792 B1**
(45) Date of publication and mention of the grant of the patent: **20.11.2013**
(21) Application number: 06782532.3
(22) Date of filing: 09.08.2006
(51) Int. Cl.: C08G 73/02, C08L 79/02, B82Y 30/00

(54) **METAL NANOPARTICLE DISPERSION AND PRODUCTION PROCESS OF THE SAME**
METALLNANOPARTIKELDISPERSION UND HERSTELLUNGSVERFAHREN DAFÜR
DISPERSION DE NANOPARTICULES MÉTALLIQUES ET LEUR PROCÉDÉ DE PRODUCTION

(43) Date of publication of application: 22.04.2009
(73) Proprietor: DIC Corporation, Tokyo 174-8520 (JP)
(72) Inventor: MATSUKI, Koichiro, Sakura-shi Chiba 285-8668 (JP); LEE, SeungTaeg, Sakura-shi Chiba 285-8668 (JP); JIN, Ren-Hua, 631 Sakado, Sakura-shi Chiba 285-8668 (JP)
(74) Representative: Albrecht, Thomas
(86) International application number: PCT/JP2006/315716
(87) International publication number: WO 2008/018123

(56) References cited:
- EP-A2- 0 665 266
- JP-A- 2 126 928
- JP-A- 02 126 928
- JP-A- 02 144 141
- JP-A- 11 080 647
- JP-A- 11 080 647
- JP-A- 58 162 682
- JP-A- 2000 334 292
- JP-A- 2000 334 292
- US-A- 4 433 079

## Description

### TECHNICAL FIELD

The present invention relates to a metal nanoparticle dispersion wherein metal nanoparticles is comprised in a dispersion wherein a polymer compound, containing a polyalkyleneimine chain, a hydrophilic segment and a hydrophobic segment, is dispersed in a solvent, and to a process for producing the metal nanoparticle dispersion.

### BACKGROUND ART

Metal nanoparticles are the generic term for metal particles having a particle diameter of one to several hundred nanometers. Since metal nanoparticles have a remarkably large specific surface area, they have attracted attention in numerous fields and are expected to be applied to catalysts, electronic materials, magnetic materials, optical materials, various types of sensors, colorants and medical testing applications and the like. However, when metal is reduced to the nano level, surface energy increases, a lowering of the melting point occurs on the particle surface, and as a result, metal nanoparticles fuse together easily, thus resulting in poor storage stability. It is therefore necessary to protect metal nanoparticles with a protectant to stabilize the metal nanoparticles by preventing them from fusing.

Examples of methods for producing metal nanoparticles include a solution method and a vapor phase method. In either case, it is essential to use a protectant as described above and various protectants have been proposed. In general, proteins such as gelatin or albumin and water-soluble polymers such as polyvinyl alcohol or polyvinyl pyrrolidone are known to offer greater protection of metal nanoparticles than low molecular weight surfactants (see, for example, Patent Document 1). However, protectants in the form of water-soluble polymers are susceptible to the occurrence of cohesion between protectants used to protect the metal nanoparticles. Consequently, metal nanoparticles frequently end up cohering when a water-soluble polymer is used as a protectant, thus these protectants are prevented from providing a radical solution for storage stability. In the abovementioned Patent Document 1, the problem of storage stability was attempted to be solved by using a complex procedure consisting of protecting a metal powder with a protectant followed by removing a solvent, and redispersing the metal powder protected with the protectant in a desired solvent when the metal powder is used. In addition, protectants typically form metal nanoparticles by physically or chemically being adsorbed or bound to the metal surface to be protected. However, since protectants in the form of the previously described water-soluble polymers lack adequate bonding strength with metal surfaces, they also have the disadvantage of being unable to stably protect the metal nanoparticles.

Methods using polymer aggregates using a triblock copolymer such as polydiethylene aminoethylmethacrylate-polyglycerol monomethacrylate-polyethylene glycol (PDEA-PGMA-PEG) have been disclosed in an attempt to stably protect metal nanoparticles (see, for example, Non-Patent Document 1). In a polymer aggregate which consists of a plurality of these triblock copolymers, the PDEA chain forms the core portion of the aggregate while the PEG chain forms a shell layer of the aggregate and is responsible for dispersion stability in water, and an intermediate layer which is the PGMA chain exists between the core portion and the shell layer. In addition, the aggregate stabilizes metals by incorporating metal in the core portion using amino groups present in the PDEA chain, and maintain aggregate form by mutual crosslinking of a plurality of PGMA chains forming the intermediate layer surrounding the core portion. In these aggregates, however, since the PDEA chain that forms the core thereof is a hydrophilic polymer chain, aggregation strength in water is poor, thereby causing the form of the aggregate to become unstable. In addition, since the crosslinking density of the intermediate layer that substantially maintains the aggregate form cannot be increased in order to incorporate metal into the core portion, improvement of storage stability of the aggregates was limited.

Polymers in which an amino-group containing polymer such as polyallylamine or poly(aminoethylmethacrylate hydrochloride) is grafted to the surface of polystyrene particles or poly(methyl methacrylate) particles have been reported to be used as examples of a dispersoid having a stable core portion(see, for example, Non-Patent Document 2 and Non-Patent Document 3). However, dispersions formed by these polymers incorporate metal into an outer shell in the form of a shell layer that mainly contributes to dispersion stability in solvent. Thus, since dispersion stability is inadequate due to changes in the morphology of the shell layer caused by the reduction and incorporation of metal, further improvements are required.
[Patent Document 1] Japanese Unexamined Patent Application, First Publication No. H8-027307
[Non-Patent Document 1] S. Liu, J.V.M. Weaver, M. Save, S.P. Armes, Langmuir, 2002, 18, 8350
[Non-Patent Document 2] J.H. Youk, Polymer, 2003, 44, 5053.
[Non-Patent Document 3] G. Sharma, M. Ballauff, Macromolecular Rapid Communications, 2004, 25, 547

US 4,433,079 A relates to a water-dispersion adhesive for extrusion lamination. It comprises a dispersion of a resin water, wherein the resin is obtained from a reaction of a polyepoxy compound with a reaction mixture of a polyethyleneimine and a monoepoxy compound.

EP 0 665 266 A2 relates to a process for the preparation of compositions comprising metal particles having an average particle diameter of less than 100 nm (number average value) and polymers on the basis of vinyl acetate, vinyl amine, vinyl imidazole, vinyl pyrrolidone, acrylamides or acrylimides or mixtures thereof, wherein the metal salts are reduced in the presence of a solvent and the polymers dissolved therein to metal particles and wherein the reaction mixture is spraydried.

JP 2000-334292 A relates to a method of producing fine particles by mixing chloroaurate in a solution with a protective high polymer, adding a reducing agent insoluble therein and stirring under heating to prepare fine particles, separating the fine particles into two layers of a dispersion having gold fine particle protected by the protective high polymer as an under layer and the reducing agent containing no gold fine particle as the upper layer and removing the reducing agent of the residual impurity in the upper layer.

JP 2-126928 A relates to the use of a specific polyether polyol as a dispersant for dispersing fine powder of an insoluble pigment in an organic liquid.

JP 11-080647 A discloses a colloidal solution obtained by incorporating a colloidal particle of one or more noble metal of, preferably gold, silver and platinum, or of copper, and a high molecular weight pigment dispersant, preferably, a macromolecule of a comb structure having pigment affinity groups in the main chain and/or a plurality of the side chains and having a plurality of the side chains constituting a solvent affinity portion, a macromolecule having a plurality of pigment affinity portions comprising pigment affinity groups in the main chain, or a straight-chain macromolecule having a pigment affinity portion comprising a pigment affinity group at one end of the main chain. The colloidal solution is obtained by dissolving a compound of a noble metal or copper (e.g. an acid of gold chloride) into a solvent, preferably water and/or an organic solvent, to add a high molecular weight pigment dispersant thereto, and thereafter adding, preferably an amine (e.g. alkanolamine), to the noble metal or copper to be reduced.

### DISCLOSURE OF THE INVENTION

### [Problems to be Solved by the Invention]

An object of the present invention is to provide a metal nanoparticle dispersion having high storage stability and superior dispersion stability, and a production process thereof.

### [Means for Solving the Problems]

As a result of conducting extensive studies to solve the aforementioned problems, the inventors of the present invention found that a metal nanoparticle dispersion in which nanoparticles can be made to be stable in a dispersion, and having the required performances described above as a result thereof, can be obtained, since a stable dispersion can be obtained in a solvent by using a polymer compound having three segments consisting of a segment having high dispersibility, a segment able to fix and reduce metal nanoparticles, and a segment that contributes to prolonging the aggregation (association) strength of an aggregate, thereby leading to completion of the present invention.

Namely, in a first aspect thereof, the present invention is a metal nanoparticle dispersion comprising: a dispersion of a polymer compound (X), which comprises a polyalkyleneimine chain (a), a hydrophilic segment (b) and a hydrophobic segment (c), wherein the polymer compound (X) has a structure in which the polyalkyleneimine chain (a) is bonded by the hydrophilic segment (b) and the hydrophobic segment (c), and metal nanoparticles (Y), wherein the hydrophilic segment (b) is a polyoxyalkylene chain, wherein the hydrophobic segment (c) is a residue of at least one compound selected from the group consisting of polystyrenes, poly(meth)acrylic acid esters, epoxy resins, polyurethanes, polycarbonates and polyacylalkyleneimines having a hydrophobic substituent and wherein the metal nanoparticles (Y) are at least one type of metal selected from the group consisting of silver, gold and platinum.

The metal nanoparticles (Y) can be contained in a dispersoid formed by the polymer compound (X), which comprises the polyalkyleneimine chain (a), the hydrophilic segment (b) and the hydrophobic segment (c), and a dispersion can be formed in a solvent.

Moreover, in a second aspect thereof, the present invention is a production process of a metal nanoparticle dispersion comprising:
forming a dispersion of a polymer compound (X), which comprises a polyalkyleneimine chain (a), a hydrophilic segment (b) and a hydrophobic segment (c), wherein the polymer compound (X) has a structure in which the polyalkyleneimine chain (a) is bonded by the hydrophilic segment (b) and the hydrophobic segment (c), in a solvent; and
adding a metal salt or metal ion solution to the dispersion to reduce metal ions and obtain metal nanoparticles (Y), wherein the hydrophilic segment (b) is a polyoxyalkylene chain, wherein the hydrophobic segment (c) is a residue of at least one compound selected from the group consisting of polystyrenes, poly(meth)acrylic acid esters, epoxy resins, polyurethanes, polycarbonates and polyacylalkyleneimines having a hydrophobic substituent and wherein the metal nanoparticles (Y) are at least one type of metal selected from the group consisting of silver, gold and platinum. The metal nanoparticles are stabilized in the form of nanoparticles (Y).

### [Effects of the Invention]

The metal nanoparticle dispersion of the present invention is capable of reducing metal ions and fixing metal in the form of metal nanoparticles in a dispersoid which consists of a plurality of polymer compounds, due to the interaction of the strong reducing ability, coordinate bonding strength and electrostatic interaction of the polyalkyleneimine chain. Moreover, accompanying these functions of polyalkyleneimine, even if changes occur in the morphology of the dispersion accompanying contraction and so forth of the polyalkyleneimine chain, the hydrophilic segment (a) and the hydrophobic segment (b) in the polymer compound (X) that forms the dispersoid demonstrate superior self-assembling ability due to high affinity with the solvent used as well as strong aggregation strength generated by interaction of these segments, thereby making it possible to maintain a stable dispersed state over a long period of time in the solvent without impairing the dispersion stability as a dispersion.

In addition, although the metal nanoparticle dispersion of the present invention can also retain a single metal nanoparticle in a single dispersoid, it also allows the fixation of a plurality of metal nanoparticles in a single dispersoid, and the amount thereof can be easily adjusted. Thus, the metal nanoparticle dispersion of the present invention is able to efficiently demonstrate the characteristics of metal nanoparticles such as high specific surface area, high surface energy and plasmon absorption, the dispersion stability of a self-assembling polymer dispersoid and properties such as storage stability corresponding to desired requirements. Moreover, the metal nanoparticles of the present invention can also be provided with various chemical, electrical and magnetic performance required by electrically conductive paste and the like, and can therefore be applied to applications in a wide range of fields, including catalysts, electronic materials, magnetic materials, optical materials, various types of sensors, colorants and medical testing applications.

### BRIEF DESCRIPTION OF THE DRAWINGS

Fig. 1 is a TEM micrograph of a silver nanoparticle dispersion obtained in Example 7.
Fig. 2 is a TEM micrograph of a silver nanoparticle dispersion obtained in Example 10.

### BEST MODE FOR CARRYING OUT THE INVENTION

The metal nanoparticle dispersion of the present invention is a dispersion wherein metal nanoparticles (Y) is included in a dispersing material which is formed by dispersing a polymer compound (X), which contains a polyalkyleneimine chain (a), a hydrophilic segment (b) and a hydrophobic segment (c), in a solvent.

The polyalkyleneimine chain (a) that forms a portion of the polymer compound (X) used in the present invention is a polymer chain capable of fixing metal or metal ions in the form of nanoparticles by forming a coordinated bond between the alkyleneimine units in the chain and metal or metal ions. The structure thereof contains secondary amine alkyleneimine units as the main repeating units. The polyalkyleneimine chain (a) may be linear or branched, and the form thereof is suitably selected according to the particle diameter and so forth of the target metal nanoparticle dispersion.

In the case of obtaining the dispersion of the present invention by the production process of a metal nanoparticle dispersion to be described later, the particle diameter of the dispersoid thereof is affected by not only the molecular weight of the polymer compound (X) used and degree of branching of the polyalkyleneimine chain (a), but also by other factors as well. For example, the particle diameter of the dispersoid is also affected by the structures and composite ratios of each component comprised in the polymer compound (X), namely the polyalkyleneimine chain (a), the hydrophilic segment (b) to be described later, and the hydrophobic segment (c) to be described later. For example, in the case of the same molecular weight of the polyalkyleneimine chain (a), if the degree of branching is low, the particle diameter of the resulting dispersoid tends to be large, and as the degree of branching increases, the particle diameter tends to decrease. Furthermore, a branched polyalkyleneimine chain is preferable for increasing the content of metal nanoparticles. In the case of producing and storing the dispersion in a hydrophilic solvent, the use of a linear polyalkyleneimine chain demonstrating crystallinity in the solvent enables the resulting metal nanoparticle dispersion to demonstrate particularly superior dispersion stability and storage stability.

In general, commercially available branched polyalkyleneimines are branched due to tertiary amines thereof, and can be used directly as raw materials of the polymer compound (X) used in the present invention. From the viewpoint of obtaining a metal nanoparticle dispersion of a desirable particle diameter capable of maintaining stable dispersibility, the degree of branching, when expressed as the molar ratio of tertiary amine/total amines, is preferably within the range of 1 to 49/100, and in consideration of such factors as commercial production and availability, is more preferably within the range of 15 to 40/100.

There are no particular limitations on the degree of polymerization of the polyalkyleneimine chain (a). However, if the degree of polymerization is excessively low, the amount of metal nanoparticles contained in the dispersoid formed with the polymer compound (X), as well as the ability to maintain that amount, become insufficient, while if the degree of polymerization is excessively high, the polymer compound (X) becomes a giant aggregate, which may impair storage stability. Thus, in order to obtain a metal nanoparticle dispersion having, for example, superior ability to fix metal nanoparticles in the resulting metal nanoparticle dispersion as well as the ability to prevent increases in the particle diameter of the dispersoid, the degree of polymerization of the polyalkyleneimine chain (a) is normally within the range of 1 to 10,000, preferably within the range of 3 to 3,000 and more preferably within the range of 5 to 1,000.

In comparison with branched polyalkyleneimine chains, linear polyalkyleneimine chains have a larger excluded volume, indicating the spread of the molecular chain, when compared at an equal degree of polymerization. Consequently, it is possible for linear polyalkyleneimine chains to form a dispersoid of sufficient size at a lower degree of polymerization. Conversely, branched polyalkyleneimine chains exhibit a higher degree of polymerization when considering on the basis of an equal excluded volume. Accordingly, the degree of polymerization in the case of using a linear polyalkyleneimine chain is particularly preferably within the range of 5 to 300, while that in the case of using a branched polyalkyleneimine chain is particularly preferably within the range of 15 to 1,000.

The polyalkyleneimine chain (a) can be used without any particular limitations , and any chain which is typically commercially available or can be synthesized can be used. In consideration of commercial availability and the like, it is preferably a polyethyleneimine chain or polypropyleneimine chain, and particularly preferably a polyethyleneimine chain.

The hydrophilic segment (b) which is included asa portion of the polymer compound (X) used in the present invention is a segment having high affinity with solvent for fulfilling the role of maintaining dispersion stability when a dispersion is formed by dispersing the polymer compound (X) in a hydrophilic solvent such as water. In addition, in the case of dispersing in a hydrophobic solvent, the hydrophilic segment (b) fulfills the role of forming a dispersion core (inner core portion of dispersoid) due to its potent intramolecular association strength (association strength of hydrophilic segments in a single molecule of the polymer compound in the case of having a plurality of hydrophilic segments in a single molecule of the polymer compound) or intermolecular association strength (between different polymer compounds). There are no particular limitations on the degree of polymerization of the hydrophilic segment (b). However, in the case of dispersing in a hydrophilic solvent, dispersion stability worsens if the degree of polymerization is excessively low, while if the degree of polymerization is excessively high, there is the possibility of cohesion among dispersoids. In addition, in the case of dispersing in a hydrophobic solvent, the association strength of the dispersoid becomes small if the degree of polymerization is excessively low, while if the degree of polymerization is excessively high, there is the possibility of being no longer able to maintain the affinity with solvent. From these viewpoints, the degree of polymerization of the hydrophilic segment (b) is normally 1 to 10,000 and preferably 3 to 3,000, while from the viewpoint of ease of the production process and the like, the degree of polymerization of the hydrophilic segment (b) is preferably 5 to 1,000. Moreover, the degree of polymerization in the case of being a polyoxyalkylene chain is particularly preferably 5 to 500.

The hydrophilic segment (b) is a polyoxyalkylene chain such as a polyoxyethylene chain or polyoxypropylene chain, from the viewpoints of obtaining a dispersion having particularly superior stability and industrial availability.

The hydrophobic segment (c) which is a portion of the polymer compound (X) used in the present invention is a segment that forms the core portion of the dispersoid and fulfills the role of forming a stable dispersion due to its potent intramolecular or intermolecular association strength in the case of dispersing in a hydrophilic solvent such as water. In addition, in the case of dispersing in a hydrophobic solvent, the hydrophobic segment (c) has high affinity with the solvent and fulfills the role of maintaining dispersion stability when forming a dispersoid.

The hydrophobic segment (c) is a residue of at least one compound selected from the group consisting of polystyrenes such as polystyrene, polymethylstyrene, polychloromethylstyrene or polybromomethylstyrene, non-water-soluble poly(meth)acrylic acid esters such as poly(methyl acrylate), poly(methyl methacrylate), poly(2-ethylhexyl acrylate) or poly(2-ethylhexyl methacrylate), polyacylalkyleneimines having a hydrophobic substituent such as polybenzoyl ethyleneimine, polybenzoyl propyleneimine, poly(meth)acryloyl ethyleneimine, poly(meth)acryloyl propyleneimine, poly[N-{3-(perfluorooctyl)propionyl} ethyleneimine] or poly[N-{3-(perfluorooctyl)propionyl} propyleneimine, and residues of resins such as epoxy resin, polyurethane or polycarbonate. The residues may be a residue of a single hydrophobic compound or a residue of a compound obtained by reacting in advance two or more types of different compounds.

The epoxy resin can be used without any particular limitations, and resins which can be commercially available or synthesized can be used. Examples of epoxy resins include bisphenol A epoxy resin, bisphenol F epoxy resin, biphenyl epoxy resin, naphthalene epoxy resin, tetrafunctional naphthalene epoxy resin, tetramethyl biphenyl epoxy resin, phenol Novolak epoxy resin, cresol Novolak epoxy resin, bisphenol A Novolak epoxy resin, triphenylmethane epoxy resin, tetraphenylethane epoxy resin, dicyclopentadiene phenol addition reaction epoxy resin, phenol aralkyl epoxy resin, naphthol Novolak epoxy resin, naphthol aralkyl epoxy resin, naphthol-phenol-condensed Novolak epoxy resin, naphthol-cresol-condensed Novolak epoxy resin, aromatic hydrocarbon formaldehyde resin-modified phenol resin-type epoxy resin, biphenyl Novolak epoxy resin, and a xanthene epoxy resin described in Japanese Unexamined Patent Application, First Publication No. 2003-201333. These epoxy resins may be used alone or two or more types thereof may be mixed. Among these epoxy resins, from the viewpoint of, for example, superior adhesion with a substrate when using the resulting metal nanoparticle dispersion as an electrically conductive paste, a residue of bisphenol A epoxy resin is preferable. From the viewpoint of obtaining a dispersoid demonstrating potent association strength in a hydrophilic solvent and having superior dispersion stability and storage stability, a residue of an epoxy resin having three or more functional groups, such as tetrafunctional naphthalene epoxy resin, is preferable. In addition, these epoxy resins may be used directly as a raw material of the polymer compound (X), or may be modified in various ways corresponding to the structure and so forth of the target polymer compound (X).

The aforementioned polyurethane can be used without any particular limitations, and polyurethane which is available commercially or synthesized can be used. The polyurethane is typically a polymer obtained by an addition reaction between polyols and polyisocyanates. Examples of the polyols include propylene glycol, neopentyl glycol, polypropylene glycol, polytetramethylene ether glycol, polyester polyols, polycaprolactone polyols, polycarbonate diols, bisphenol A, bisphenol F, 4,4'- dihydroxydiphenyl, 3,3',5,5'-tetramethylbiphenyl-4,4'-diol, phenol Novolak, cresol Novolak, propanediol, butanediol, pentanediol, n-hexanediol, cyclohexanediol, methylpentanediol, polybutadiene dipolyol, trimethylolpropane, dihydroxybenzene, compounds having two or more glycidyl functional groups, and compounds modified from the previously listed epoxy resins. These polyols may be used alone or two or more types thereof may be used as a mixture.

In addition, examples of polyisocyanates include diphenylmethane diisocyanate, tolylene diisocyanate, xylene diisocyanate, bis(isocyanatemethyl)cyclohexane, hexamethylene diisocyanate, 1,5-naphthalene diisocyanate, tetramethylxylene diisocyanate, isophorone diisocyanate, hydrogenated xylylene diisocyanate, dicyclohexylmethane diisocyanate, hexamethylene diisocyanate, dimer acid diisocyanate, norbornene diisocyanate and trimethylhexamethylene diisocyanate, and these may be used alone or two or more types thereof may be used as a mixture.

Among these, from the viewpoint of having superior adhesion with various substrates formed with inorganic materials or hybrid materials and the like when using the resulting metal nanoparticle dispersion as an electrically conductive paste, polypropylene glycol and bisphenol A epoxy resin-modified polyols are preferable as polyols, while hexamethylene diisocyanate and bis(isocyanatemethyl)cyclohexane and the like are preferably used as polyisocyanates for producing polyurethanes. The use of polyurethane obtained by combining these preferable materials is the most preferable. In addition, these polyurethanes may be used directly as a raw material of the polymer compound (X), or they may be modified in various ways corresponding to the structure and so forth of the target polymer compound (X).

The aforementioned polycarbonate can be used without any particular limitations, and polycarbonate which can be commercially available or can be synthesized can be used. The polycarbonate is typically a polymer produced from a condensation reaction between bisphenol A and phosgene or diphenylcarbonate and the like. Polycarbonate is a typical example of these polycarbonates. Various carbonate-based polymers, which can be produced using various raw materials exemplified as polyols for forming the aforementioned polyurethanes instead of using bisphenol A which is a raw material of polycarbonates, are also examples of polycarbonates.

Among these, polycarbonates are preferable from the viewpoint of, for example, superior adhesion with various substrates, such as polycarbonate substrates, when using the resulting metal nanoparticle dispersion as an electrically conductive paste. In addition, these polycarbonates may be used directly as a raw material of the polymer compound (X) or may be modified in various ways corresponding to the structure and so forth of the target polymer compound (X).

Among the examples of the hydrophobic segment (C) as listed above, residues of at one or more types of compounds selected from the group consisting of polystyrene, poly(meth)acrylic acid ester, epoxy resin, polyurethane, polycarbonate and polyacylalkyleneimines having a hydrophobic substituent are preferable hydrophobic segments based on a comprehensive assessment including not only industrial availability and handling ease of each compound used as a raw material, but also the degree of hydrophobic aggregation strength when used in the polymer compound (X). From the viewpoints of the superiority of the industrial production process of the polymer compound (X), cost and availability in particular, polystyrene, poly(methyl(meth)acrylate), epoxy resins, polyurethanes and/or polycarbonates are more preferable, while residues of epoxy resins are the most preferable.

In addition, there are no particular limitations on the degree of polymerization of the hydrophobic segment (c). However, dispersion stability worsens if the degree of polymerization is excessively low in the case of dispersing in a hydrophilic solvent, while if the degree of polymerization is excessively high, there is the possibility of dispersoids mutually cohering. In addition, the dispersibility of the dispersion deteriorate if the degree of polymerization is excessively low in the case of dispersing in a hydrophobic solvent, while if the degree of polymerization is excessively high, there is the possibility of being unable to secure adequate affinity with the solvent. From these viewpoints, the degree of polymerization of the hydrophobic segment (c) is normally 1 to 10, 000. In addition, in the case of polystyrenes, poly(meth)acrylic acid esters or polyacylalkyleneimines having a hydrophobic substituent and the like, the degree of polymerization is preferably 3 to 3,000 and more preferably 10 to 1,000. In addition, in the case of being comprised of residues of resins such as epoxy resins, polyurethanes or polycarbonates and the like, the degree of polymerization is normally 1 to 50, preferably 1 to 30 and particularly preferably 1 to 20.

The polymer compound (X) used in the present invention is a compound in which the aforementioned polyalkyleneimine chain (a), the hydrophilic segment (b) and the hydrophobic segment (c) are bonded, and the polymer compound (X) has a structure in which the polyalkyleneimine chain (a) is bonded by the hydrophilic segment (b) and the hydrophobic segment (c). The polymer compound (X) has the ability to fix metal in a dispersoid in the form of nanoparticles, and has the ability to form a dispersion having high dispersion stability and high storage stability in a solvent.

There are no particular limitations on the production process of the polymer compound (X) used in the present invention. However, the process described below is preferable from the viewpoint of being able to easily synthesize the polymer compound (X) as designed.

A polyalkyleneimine chain can be suitably used that is commercially available or synthesized as previously described.

First, an explanation is provided for the case of using a branched polyalkyleneimine chain.

Synthesis of a branched polyalkyleneimine chain able to be used in the present invention may be carried out by various methods and there are no particular limitations thereon. Examples of a typical method include a method of carrying out ring-opening polymerization on ethylenemine using an acid catalyst. Since the ends of branched polyethyleneimines are in the form of primary amines, if precursors of the hydrophilic segment (b) and the hydrophobic segment (c) have a functional group that reacts with primary amine, a polymer compound able to be used in the present invention can be synthesized by a sequential or simultaneous reaction there between. There are no particular limitations on the functional groups that react with primary amine, and examples thereof include an aldehyde group, carboxyl group, isocyanate group, tosyl group, epoxy group, glycidyl group, isothiocyanate group, halogen, acid chloride and sulfonic acid chloride. Among these, a carboxyl group, isocyanate group, tosyl group, epoxy group and glycidyl group are preferable functional groups since they are advantageous in terms of the production process with respect to reactivity, handling ease and the like.

Even if the precursors of the hydrophilic segment (b) and the hydrophobic segment (c) do no have a functional group which reacts directly with primary amine, they can also be used preferably in so far as a functional group thereof is able to be converted to a functional group capable of reacting with primary amine as a result of carrying out various types of treatment. For example, if the precursor has a hydroxyl group, this may be reacted with a polyethyleneimine chain after using a method such as that for converting the hydroxyl group to a glycidyl group. Moreover, after carrying out treatment for converting a primary amine of the branched polyethyleneimine chain to another functional group capable of reacting with a functional group possessed by a precursor of the hydrophilic segment (b) and/or the hydrophobic segment (c), they can be reacted to synthesize the polymer compound (X).

Moreover, an aqueous dispersion of the polymer compound (X) used in the present invention can also be obtained by reacting the branched polyalkyleneimine chain with a nonionic hydrophilic polymer to obtain a compound, dissolving or dispersing the resulting compound in an aqueous solvent, and adding a radical initiator and radical polymerizable monomer for deriving a hydrophobic segment followed by carrying out radical polymerization. In this method, as a result of polymerizing the radical polymerizable monomer from a radical starting point generated in an amino group through interaction between a radical initiator such as hydrogen peroxide and the amino group, or from a radical starting point generated in an amino group, for example, as a result of chain transfer of a radical generated from the radical initiator to the amino group, a hydrophobic segment is introduced into the compound obtained by reacting the branched polyalkyleneimine chain with the nonionic hydrophilic polymer. Examples of radical polymerizable monomers able to be used here include styrenes such as styrene, 2-methylstyrene or 3-methylstyrene, and (meth) acrylic acid esters such as methyl (meth) acrylate, ethyl (meth)acrylate or butyl (meth)acrylate. Styrene and methyl (meth)acrylate are used preferably from the viewpoints of industrial availability and handling ease.

The following provides an explanation of the case of using a linear polyalkyleneimine chain.

A linear polyalkyleneimine chain is typically obtained by a method which includes synthesizing a polyacylated alkyleneimine chain by living polymerization followed by hydrolysis. By considering that the polymer compound (X) used in the present invention has a hydrophilic segment and a hydrophobic segment, a preferable method can be used in which a desirable order of synthesis can be selected as the occasion demands.

The order of synthesis varies depending on the polymerization conditions such as the polymerization method used and the initiator used. Typical examples of a method for synthesizing a linear polymer compound includes a method includes first synthesizing a segment which is a hydrophobic polymer chain by living polymerization, and then obtaining a polymer compound by carrying out synthesis for bonding a polyacylated alkyleneimine chain and subsequently a segment which is a hydrophilic polymer chain to the hydrophobic segment which is the polymer chain, followed by carrying out hydrolysis to obtain the polymer compound (X) having a polyalkyleneimine chain.

In addition, another method may be used wherein the method comprises: synthesizing a segment which is a hydrophilic polymer chain, obtaining a linear polymer compound by carrying out synthesis for bonding a polyacylated alkyleneimine to the segment which is a hydrophilic polymer chain followed by further bonding a segment which is a hydrophobic polymer chain to the segment which is a hydrophilic polymer chain, and carrying out hydrolysis to obtain the polymer compound (X) having a polyalkyleneimine chain.

An example of still another method is indicated below. In this method, a compound having a polyacylated alkyleneimine chain and a segment which is a hydrophobic polymer chain, and having an electron-attracting end in the form of a halogen and/or tosyl group on the living end thereof, is synthesized by using living radical polymerization, atom transfer radical polymerization (ATRP), living cationic polymerization or the like. Next, a hydrophilic polymer chain having a functional group is condensed with the resulting compound to synthesize a polymer compound followed by carrying out hydrolysis to obtain a polymer compound having a polyalkyleneimine chain.

As an example of a different type of method, following method or the like can be cited. For example, a polyacylated alkyleneimine chain bound to a hydrophilic polymer by living cationic polymerization and the like is synthesized using as an initiator a hydrophilic polymer having an electron-attracting group such as a halogen and/or tosyl group on the end thereof to obtain a compound having a segment which is a hydrophilic polymer chain having an electron-attracting group such as a halogen and/or tosyl group on the living end thereof and a polyacylated alkyleneimine chain. Then, this compound is condensed with a hydrophobic compound having a functional group on the end thereof to synthesize a polymer compound and then carrying out hydrolysis to obtain a polymer compound having a polyalkyleneimine chain.

The following describes an example of synthesizing a comb-shaped or star-shaped polymer compound (X) using a living polymerization reaction.

A plurality of polyacylated alkyleneimine chains are introduced into a hydrophobic compound having a plurality of electron-attracting groups such as halogens and/or tosyl groups by using the hydrophobic compound as an initiator and carrying out graft polymerization thereon using living cationic polymerization. Continuing, a comb-shaped or star-shaped polymer compound is obtained by introducing a segment which is a hydrophilic polymer chain onto the living end of the resulting compound by similarly using living cationic polymerization, followed by hydrolysis to obtain the polymer compound (X) having a polyalkyleneimine chain.

The compound used as a initiator used for living polymer may be a hydrophilic polymer chain. In this case, the polymer compound (X) can be obtained by synthesizing a polyacylated alkyleneimine chain that bonds to the hydrophilic polymer chain followed by introducing a segment which is a hydrophobic polymer chain.

There are no particular limitations on the initiators able to be used in the various living polymerization reactions described above. In the case of ATRP as an example thereof, examples of initiators include transition metal halides such as benzyl chloride, benzyl bromide, 1-(chloroethyl)benzene or 1-(bromoethyl)benzene, as well as co-catalysts such as copper chloride or copper bromide, and complexes formed with bipyridine, 4,4'-di(5-nonyl)-2,2'-bipyridine, methyl-2-bromopropionate or ethyl-2-bromoisobutyrate. In the case of living cationic polymerization, examples of initiators include methyl bromide, ethyl bromide and methyl tosylate.

Examples of functional groups used in the aforementioned condensation reaction include hydroxyl groups, carboxyl groups and amino groups, and the reaction can be carried out in the presence of a basic compound. Examples of basic compounds able to be used include inorganic bases such as sodium hydroxide, potassium hydroxide, sodium carbonate or potassium carbonate, and organic bases such as sodium t-butoxide or potassium t-butoxide.

A reaction solvent can be used when carrying out a living polymerization reaction or condensation reaction as described above, and an aprotic solvent can typically be used preferably. Among these, N,N-dimethylacetoamide (DMA) or N,N-dimethylformamide (DMF) are used particularly preferably.

The following (I) to (VI) provide a description of typical examples of methods for synthesizing the polymer compound (X).
(I) A commercially available product is used for the branched polyalkyleneimine, and a tosylate of polyethylene glycol monomethyl ether is used for the hydrophilic polymer. The hydrophilic polymer can be obtained by, for example, reacting polyethylene glycol monomethyl ether and tosyl chloride in a polar solvent in the presence of pyridine. An epoxy resin having epoxy groups on the terminal ends thereof is used for the hydrophobic polymer. In the case of reacting this combination, the polyethyleneimine is first dissolved in a polar solvent followed by adding the tosylate of the polyethylene glycol monomethyl ether in the presence of a alkali such as potassium carbonate and reacting at 100°C to synthesize a compound having a structure containing a polyethylene glycol moiety and a polyethyleneimine moiety. Subsequently, the epoxy resin can be added in a mixed solvent of acetone and methanol followed by reacting at 60°C to obtain a polymer compound having a polyethylene glycol-polyethyleneimine-epoxy resin structure.
(II) A commercially available product is used for the branched polyalkyleneimine and the tosylate of the polyethylene glycol monomethyl ether obtained in the same manner as described in (I) above is used for the hydrophilic polymer. Polystyrene having a single brominated terminal end synthesized by atom transfer radical polymerization (ATRP) is used for the hydrophobic polymer. The polystyrene can be synthesized by, for example, carrying out living radical polymerization of styrene monomer in toluene solvent in the presence of bipyridine, copper bromide and 1-bromoethylbenzene. In the case of reacting the combination of the hydrophilic polymer and the hydrophobic polymer, the single-end-brominated polystyrene is first dissolved in a polar solvent followed by treatment with an alkali such as sodium hydroxide to obtain polystyrene of which one end is hydroxylated. Moreover, tosyl chloride is allowed to react in a polar solvent in the presence of pyridine to obtain polystyrene of which one end is tosylated. By then reacting this with the compound having a structure containing a polyethylene glycol moiety and a polyethyleneimine moiety obtained in the same manner as (I) above in a polar solvent and in the presence of an alkali such as potassium carbonate at 100°C, a polymer compound can be obtained having a polyethylene glycol-polyethyleneimine-polystyrene structure.
(III) Sulfonylated polyethylene glycol monomethyl ether is used as a polymerization initiator, and this is then used to carry out living cationic polymerization of 2-methyloxazoline in dimethylacetoamide. Following completion of the reaction, 2-phenyloxazoline can be subjected to living cationic polymerization to obtain a polymer compound having a polyethylene glycol-polyacetyl ethyleneimine-polybenzoyl ethyleneimine structure.
   Moreover, a polymer compound having a polyethylene glycol-polyethyleneimine-polybenzoyl ethyleneimine structure can be obtained by acid hydrolyzing the polyacetyl ethyleneimine segment.
(IV) First, atom transfer radical polymerization (ATRP) is carried out on a styrene monomer in toluene in the presence of benzyl bromide, copper bromide and bipyridine to synthesize polystyrene having a single brominated end. This is then used as a polymerization initiator to carry out living cationic polymerization of 2-methyloxaline in dimethylacetoamide to obtain a compound having a brominated polyacetyl ethyleneimine moiety, which has a brominated end, and a polystyrene moiety.
   On the other hand, vinyl acetate is placed in dimethylacetoamide followed by partial hydrolysis of the acetyl groups using sodium methoxide. Subsequently, a reaction solution containing the compound having a structure having a brominated polyacetyl ethylene moiety, which has a brominated end, and polystyrene moiety at least an equimolar amount to the -ONa moiety present is introduced to obtain a polymer compound having a polyvinyl acetate-polyacetyl ethyleneimine-polystyrene structure. Moreover, a polymer compound having a polyvinyl alcohol-polyethyleneimine-polystyrene structure can then be obtained by acid hydrolysis.
(V) Sulfonylated epoxy resin is used as a polymerization initiator to carry out living cationic polymerization of 2-methyloxazoline in dimethylacetoamide. Continuing, a polymer compound having a polypropionyl ethyleneimine-polyacetyl ethyleneimine-epoxy resin structure is obtained by carrying out living cationic polymerization of the 2-ethyloxazoline. Moreover, a polymer compound having a polypropionyl ethyleneimine-polyethyleneimine-epoxy resin structure can be obtained by alkaline hydrolyzing the polyacetyl ethyleneimine segment.
(VI) Sulfonylated epoxy resin is used as a polymerization initiator to carry out living cationic polymerization on 2-methyloxazoline in dimethylacetoamide. Polyethylene glycol monomethyl ether is then reacted with the tosylated end of the copolymer synthesized above to obtain a polymer compound having a polyethylene glycol monomethyl ether-polyacetyl ethyleneimine-epoxy resin structure. Moreover, a polymer compound having a polyethylene glycol-polyethyleneimine-epoxy resin structure can be obtained by acid hydrolysis of the polyacetyl ethyleneimine segment.

Furthermore, various reaction conditions of the sulfonylation of epoxy resin, living polymerization of epoxy resin and hydrolysis of the polyacetyl ethyleneimine segment and the like are in accordance with, for example, Japanese Unexamined Patent Application, First Publication No. 2005-307185.

There are no particular limitations on the ratio (a:b:c) of the degrees of polymerization of the polymers. The polymers are chains of each portion of the polymer compound (X). That is, polyalkylene imine chain (a), the hydrophilic segment (b) and the hydrophobic segment (c) in the polymer compound (X) used in the present invention. From the viewpoint of superior aggregation strength, dispersion stability and storage stability of the resulting metal nanoparticle dispersion, the ratio is within the range of 5, 000: 5 to 5, 000, 000: 1 to 5, 000, 000 ((a):(b):(c)), when the degrees of polymerization of the polyalkylene imine chain is 5000. In the case of using a linear polyalkyleneimine chain for the polyalkyleneimine chain (a) in particular, the ratio is preferably 5000: 80 to 1,000,000:10 to 3,000,000. In the case of using a branched polyalkyleneimine chain, the ratio is preferably 5000:25 to 400,000:5 to 1,000,000.

Moreover, in the case of using a linear polyalkyleneimine chain, when the degree of polymerization of the linear polyalkyleneimine chain is 5000 and a polyoxyalkylene chain, which is a preferable example of the hydrophilic segment (b), is used, the range of the ratio of the polyoxyalkylene chain is more preferably 80 to 500,000. In the case of using any of polystyrenes, poly(meth)acrylic acid esters or polyacylalkyleneimines having a hydrophobic substituent and the like for the hydrophobic segment (c), the range of the ratio of the hydrophobic segment (c) is more preferably 50 to 3,000,000. Alternatively, in the case of using any of epoxy resins, polyurethane, or compound which is a residue of a resin such as a polycarbonate and the like for the hydrophobic segment (c), the range of the ratio thereof is more preferably 10 to 50,000.

On the other hand, when the degree of polymerization of the branched polyalkyleneimine chain is 5,000, in the case of using a preferable example of the hydrophilic segment (b) in the form of a polyoxyalkylene chain for the hydrophilic segment (b), the range of the ratio thereof is more preferably 25 to 200,000, and in the case of using any of polystyrenes, poly(meth)acrylic acid esters or polyacylalkyleneimines having a hydrophobic substituent and the like for the hydrophobic segment (c), the range of the ratio thereof is more preferably 15 to 1,000,000. Alternatively, in the case of using any of epoxy resins, polyurethane or compound which is a residue of a resin such as polycarbonate and the like for the hydrophobic segment (c), the range of the ratio thereof is more preferably 5 to 20,000.

Furthermore, there are no particular limitations on the molecular weight of the polymer compound (X), and can be selected as necessary. Molecular weight can be derived from the degree of polymerization of each segment and the ratio ((a):(b):(c)) of the polyalkyleneimine chain (a), the hydrophilic segment (b) and the hydrophobic segment (c), and the molecular weight of the resulting polymer compound (X) varies according to the molecular weight of the monomers which are comprised in each segment. If ventured to be specifically expressed, the weight average molecular weight (Mw) of a typically used polymer compound (X) is 100 to 2,000,000, preferably 1,000 to 500,000 and more preferably 3,000 to 300,000.

The polymer compound (X) used in the present invention, has the hydrophilic segment (b) and the hydrophobic segment (c), which form a core portion and a shell portion when the compounds (X) form an aggregate by association in a solvent, in addition to the polyalkyleneimine chain (a) capable of allowing metal nanoparticles to remain stable. As has been previously described, the hydrophilic segment (b) is able to demonstrate potent aggregation strength in a hydrophobic solvent, while demonstrating high affinity with solvent in a hydrophilic solvent. In addition, the hydrophobic segment (c) is able to demonstrate potent aggregation strength in a hydrophilic solvent, while demonstrating high affinity with solvent in a hydrophobic solvent. Moreover, in the case an aromatic ring is present in the hydrophobic segment (c), the π electrons of the aromatic ring interact with the metal nanoparticles (Y), and this can be expected to contribute to further stabilization of the metal nanoparticles (Y).

In the present invention, compounds (X) are used which independently has such a portion capable of containing metal, core-forming portion and shell-forming portion within a single structure. As a result of having such a structure, during formation of a metal nanoparticle dispersion using the compounds (X), decreases in aggregation strength among segments forming the core portion or contraction of segments forming the shell portion in various solvents does not occur, and as a result, the stability of the dispersion is not impaired even if the metal nanoparticles are comprised. Thus, the metal nanoparticle dispersion of the present invention has superior storage stability in various types of solvents due to a core portion aggregated by potent aggregation strength and a shell portion demonstrating superior dispersion stability in solvent.

The metal species that forms the metal nanoparticles (Y) which can exist in the metal nanoparticle dispersion of the present invention are the transition metals such as silver, gold, and platinum. In addition, the metal nanoparticles (Y) comprised in the metal nanoparticle dispersion of the present invention may be composed of a single type or may be composed of two or more types.

The transition metals listed, silver, gold, and platinum are used since they are spontaneously reduced by allowing to stand at room temperature or by heating after having metal ions thereof have coordinated to polyethyleneimine. Moreover, silver, gold and platinum are transition metals used in the present invention in terms of ease of the reduction reaction, handling ease and the like.

There are no particular limitations on the content of the metal nanoparticles (Y) in the metal nanoparticle dispersion of the present invention. However, if the content is excessively low, it becomes difficult for the metal nanoparticles to demonstrate their properties in the dispersion, while if the content is excessively high, the relative weight of the metal nanoparticles in the dispersion increases, and the metal nanoparticle dispersion is predicted to precipitate due to the balance between the relative weight thereof and the dispersion maintaining ability of the dispersion. From these viewpoints and from the viewpoints of reduction capacity and coordination capacity and the like attributable to the alkyleneimine unit in the polymer compound (X), the content of the metal nanoparticles (Y) can be described such that metal atoms of the metal nanoparticles (Y) is normally within the range of 1 to 20,000 moles and preferably within the range of 1 to 10,000 moles, when the total number of nitrogen atoms (as atoms) contained in the polyalkyleneimine chain (a) is a value of 100 moles. In the production process to be described later in particular, in the case of combining the use of a reducing agent, the content of metal atoms of the metal nanoparticles (Y) is preferably 50 to 7,000 moles, and in the case of not combining the use of a reducing agent, preferably 5 to 70 moles.

There are no particular limitations on the particle diameter of the metal nanoparticles (Y) included in the metal nanoparticle dispersion of the present invention, and can be selected as necessary. However, in order for the metal nanoparticle dispersion to have even higher dispersion stability, the particle diameter of the metal nanoparticles (Y) comprised in the metal nanoparticle dispersion of the present invention is such that the metal nanoparticles (Y) are in the form of fine particles preferably having a mean particle diameter within the range of 1 to 50 nm, more preferably within the range of 2 to 40 nm and even more preferably within the range of 5 to 30 nm.

Metal nanoparticles having a particle diameter on the order of several tens of nanometers typically have a characteristic optical absorption attributable to surface plasmon excitation. Thus, a dispersion obtained in the present invention can be confirmed to have metal present in the form of fine particles on the nanometer order in the dispersion by measuring the plasmon absorption thereof. Moreover, the mean particle diameter, distribution range and the like can also be measured with a transmission electron micrograph (TEM) of a film obtained from a cast of the dispersion or the like.

The production process of a metal nanoparticle dispersion of the present invention comprises adding a metal salt or metal ion solution to a medium in which the compound (X) is dispersed wherein the compound (X) has the polyalkyleneimine chain (a), the hydrophilic segment (b) and the hydrophobic segment (c), and reducing the metal ions to stabilize and form metal nanoparticles. A metal nanoparticle dispersion produced in this manner has superior dispersion stability and storage properties. Moreover, this metal nanoparticle dispersion has the ability to be able to function as various metal-containing functional dispersions due to functions of color developing, catalyst and electrical of the metal nanoparticles.

The polymer compound (X) having the polyalkyleneimine chain (a), the hydrophilic segment (b) and the hydrophobic segment (c) used in the production process of a metal nanoparticle dispersion of the present invention can be prepared from the previously described raw materials according to a process as previously described. The compound is able to form a dispersoid in various types of solvent such as water, hydrophilic solvent or hydrophobic solvent corresponding to the medium thereof. There are no particular limitations on the medium able to be used, and the dispersoid formed may be an oil droplet-in-water system (O/W system) or water droplet-in-oil system (W/O system). In the present invention, a hydrophilic solvent, hydrophobic solvent, mixed solvent thereof or mixed solvent combining the use of other solvents as will be described later can be variously selected according to the purpose of use of the resulting metal nanoparticle dispersion. In the case of using a mixed solvent, the mixing ratio is preferably such that the amount of hydrophilic solvent is larger when using an O/W system and that the amount of hydrophobic solvent is larger when using a W/O system. The mixing ratio cannot be summarily limited since it varies according to the type of polymer compound used. However, as an example as a general reference thereof, an amount of hydrophilic solvent equal to five time volumes or more of the amount of hydrophobic solvent is preferably used when using an O/W system, while an amount of hydrophobic solvent equal to five time volumes or more of the amount of hydrophilic solvent is preferably used when using a W/O system.

Examples of hydrophilic solvents include methanol, ethanol, isopropyl alcohol, tetrahydrofuran, acetone, dimethylacetoamide, dimethylformamide, ethylene glycol, propylene glycol, ethylene glycol monomethyl ether, propylene glycol monomethyl ether, ethylene glycol dimethyl ether, propylene glycol dimethyl ether dimethylsulfoxide, dioxolane and N-methylpyrrolidone, and these may be used alone or two or more types thereof may be mixed.

Examples of hydrophobic solvents include hexane, cyclohexane, ethyl acetate, butanol, methylene chloride, chloroform, chlorobenzene, nitrobenzene, methoxybenzene, toluene and xylene, and these may be used alone or two or more types thereof may be mixed.

Examples of other solvents able to be used by mixing with hydrophilic solvent or hydrophobic solvent include ethyl acetate, propyl acetate, butyl acetate, isobutyl acetate, ethylene glycol monomethyl ether acetate and propylene glycol monomethyl ether acetate, and these are suitably selected according to application of the resulting metal nanoparticle dispersion.

There are no particular limitations on the method used to disperse the polymer compound in a medium and prepare the dispersion, and a method can be selected as necessary. Normally, a dispersion can easily be prepared by allowing to stand undisturbed at room temperature or by stirring and the like. Ultrasonic treatment or heat treatment may also be carried out as necessary. In addition, in cases of low compatibility with the medium due to the crystallinity of the polymer compound and the like, for example, the polymer compound may be dissolved or swollen in a small amount of a good solvent followed by dispersing in the target medium. This is even more effective if ultrasonic treatment or heat treatment are carried out at this time.

In the case of using a mixture of a hydrophilic solvent and a hydrophobic solvent, it is not necessary to apply any particularly limitations on the mixing method or mixing order thereof, and mixing may be carried out using various methods as necessary. Since differences may occur in the affinity or dispersibility with each type of solvent depending on the type or composition and so forth of the polymer compound used, the solvent mixing ratio, order of mixing, mixing method and mixing conditions and the like are preferably suitably selected according to the objective.

Metals able to be used in the production process of a metal nanoparticle dispersion of the present invention are as previously described. In the case of actually using as raw materials, they are preferably used in the form of metal salts or ionic solutions. Metal ions used here are preferably those from water-soluble metal compounds, and salts from metal cations and acidic anions or water-soluble metal compounds in which metals are contained in basic anions can be used for the water-soluble metal compounds. Metal ions having metal species such as a transition metal can be used preferably. Furthermore, in the description of the present invention, metal ions refer to ions which comprise a metal therein.

In the present invention, the transition metal ions are transition metal cations (Mⁿ⁺) or anions (MLₓⁿ⁻) comprised of bonds with halogens, and are preferably able to coordinate with the polyalkyleneimine chain (a) to form a complex. (In the above explanation, M represents a metal atom and L represents a halogen.)

The transition metal cations are cations (Mⁿ⁺) of the following transition metals such as monovalent, divalent, trivalent and tetravalent cations of

Ag, Pt or Au. Examples of counter ions able to be used with these metal cations include Cl, NO₃, S0₄ and organic anions of carboxylic acids. However, in the case of transition metal cations such as Ag, Au and Pt that are easily reduced by a polyethyleneimine skeleton, a complex of the polyalkyleneimine chain (a) is preferably prepared by inhibiting reduction reactions by, for example, making the pH acidic.

Moreover, following anions (MLₓⁿ⁻) containing metals, such as anions such as AgNO₃, AuCl₄ or PtCl₄ in which a metal is coordinated with a halogen, can preferably be made to coordinate with the polyalkyleneimine chain (a) in the form of a complex.

As was previously described, the metal ions of silver, gold, or platinum in particular are preferable since they are spontaneously reduced at room temperature or while heated after coordinating with polyethyleneimine and converted to nonionic metal nanoparticles.

In addition, two or more types of metal species can be contained in a dispersion. In this case, each dispersoid can incorporate a different metal, or a single dispersoid can incorporate two or more types of mutually different metals, by simultaneously or separately adding numerous types of metal ions salts or ions. The numerous types of metal ions incorporated in the dispersoid (s) undergo a reduction reaction resulting in the formation of numerous types of metal particles (nanoparticles). As a result, a dispersion can be obtained containing numerous types of metals.

In the case of using a metal that does not reduce spontaneously or for which spontaneous reduction is inadequate, or in the case of desiring to incorporate a large number of metals into a dispersion, a metal nanoparticle dispersion can be formed by further going through a step in which metal ions are reduced using a reducing agent.

Various reducing agents can be used for the aforementioned reducing agent and there are no particular limitations thereon. A preferable reducing agent is preferably selected according to the application of the resulting metal nanoparticle dispersion, the metal species contained therein and the like. Examples of reducing agents that can be used include hydrogen, boron compounds such as sodium borohydride or ammonium borohydride, alcohols such as methanol, ethanol, propanol, isopropyl alcohol, ethylene glycol or propylene glycol, aldehydes such as formaldehyde, acetoaldehyde or propionaldehyde, acids such as ascorbic acid, citric acid or sodium citrate, amines such as propylamine, butylamine, diethylamine, dipropylamine, dimethylethylamine, triethylamine, ethylenediamine, triethylenetetramine, methylaminoethanol, dimethylaminoethanol or triethanolamine, and hydrazines such as hydrazine or hydrazine carbonate. Among these, preferable examples of reducing agents in terms of industrial availability and handling include sodium borohydride, ascorbic acid, sodium citrate, methylaminoethanol and dimethylaminoethanol.

In the production process of the present invention, although there are no particular limitations on the usage ratios of the polymer compound and the metal salt or ionic solution, the content of metal atoms is normally within the range of 1 to 20,000 moles and preferably within the range of 1 to 10,000 moles, when the total amount of nitrogen atoms (as atoms) contained in the polyalkyleneimine chain of the polymer compound is 100 moles. In the case of combining the use of a reducing agent, the content of metal atoms is particularly preferably 50 to 7, 000 moles, while in the case of not combining the use of a reducing agent, the content of metal atoms is particularly preferably 5 to 70 moles.

In the production process of a metal nanoparticle dispersion of the present invention, there are no particular limitations on the method used to mix the dispersion in which the polymer compound is dispersed and the metal salt or ionic solution. A method may be used in which the metal salt or ionic solution is added to the dispersion in which the polymer compound is dispersed or the polymer compound is added to the dispersion in which the metal salt or ionic solution is added, or a method may be used in which they may be simultaneously added to the same container from different containers. There are also no particular limitations on the mixing method such as stirring.

In addition, there are also no particular limitations on the addition method in the case of combining the use of a reducing agent. For example, the reducing agent can be added directly or can be added in after dissolving and/or dispersing in an aqueous solution or other solvent. In addition, there are also no particular limitations on the order in which the reducing agent is added, and for example, the reducing agent may be added to a dispersion of the polymer compound in advance, the reducing agent may be added simultaneously when mixing the metal salt or ionic solution, or the reducing agent may be mixed in immediately after, several days after or several weeks after mixing the dispersion of the polymer compound and the metal salt or ionic solution.

When adding the metal salt or ionic solution used in the production process of the present invention to the dispersion in which the polymer compound is dispersed, the metal salt or ionic solution can be added directly or in the form of an aqueous solution, without regard to an O/W system or W/O system. As was previously described, metal ions such as silver, gold, palladium and platinum are spontaneously reduced at room temperature or by heating, after having coordinated with alkyleneimine units in a copolymer. Consequently, a metal nanoparticle dispersion can be obtained by allowing to stand undisturbed or stirring either at room temperature or by heating. A desired metal nanoparticle dispersion can also be obtained by allowing to stand undisturbed or stirring at room temperature or by heating in the case of using other metals and in the case of using a reducing agent as necessary. At this time, the reducing agent is preferably used directly or prepared in the form of an aqueous solution. Although the temperature in the case of heating varies according to such factors as the type of polymer compound and types of metal, medium and reducing agent used, the temperature is typically 100°C or lower and preferably 80°C or lower.

The metal nanoparticle dispersion of the present invention is able to remain stably dispersed for a long period of time in all types of media. Consequently, there are no limitations on the applications thereof, and they can be used in an extremely wide range of fields, including catalysts, electronic materials, magnetic materials, optical materials, various types of sensors, colorants and medical testing applications. Since the metal species able to be contained and the ratio thereof can be easily adjusted, effects can be efficiently demonstrated according to the objective. Moreover, since the dispersion remains stably dispersed for a long period of time, it is compatible with long-term use and storage resulting in a high degree of usefulness. In addition, the production process of a metal nanoparticle dispersion of the present invention is highly advantageous as an industrial production process since it requires hardly any complex steps or precise setting of conditions and the like.

### [Examples]

Although the following provides a more detailed explanation of the present invention through examples thereof, the present invention is not limited to these examples. Furthermore, percent (%) refers to percent by mass (mass%) unless specifically indicated otherwise.

Furthermore, the following abbreviations are used for molecular structures and names of substances.
PEI: Polyethyleneimine
PEG: Polyethylene glycol
PEGM: Polyethylene glycol monomethyl ether
PAEI: Polyacetyl ethyleneimine
PBEI: Polybenzoyl ethyleneimine
PPEI: Polypropionyl ethyleneimine
PVAC: Polyvinyl acetate
PVAL: Polyvinyl alcohol
EP: Epoxy resin
BisAEP: Bisphenol A epoxy resin
PSt: Polystyrene
PMMA: Poly(methyl methacrylate)
MOZ: 2-methyloxazoline
EOX: 2-ethyloxazoline
POZ: 2-phenyloxazoline
DMA: N,N-dimethylacetoamide

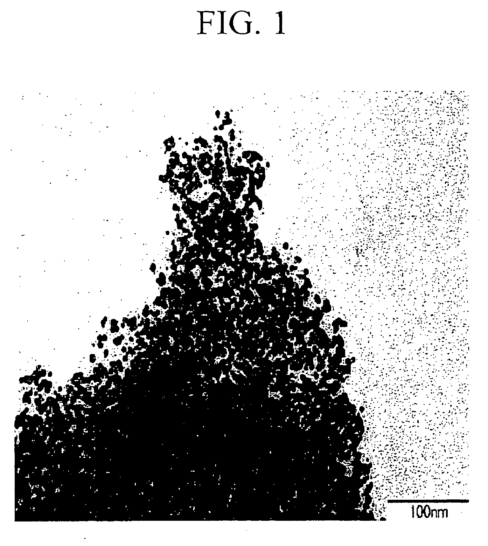

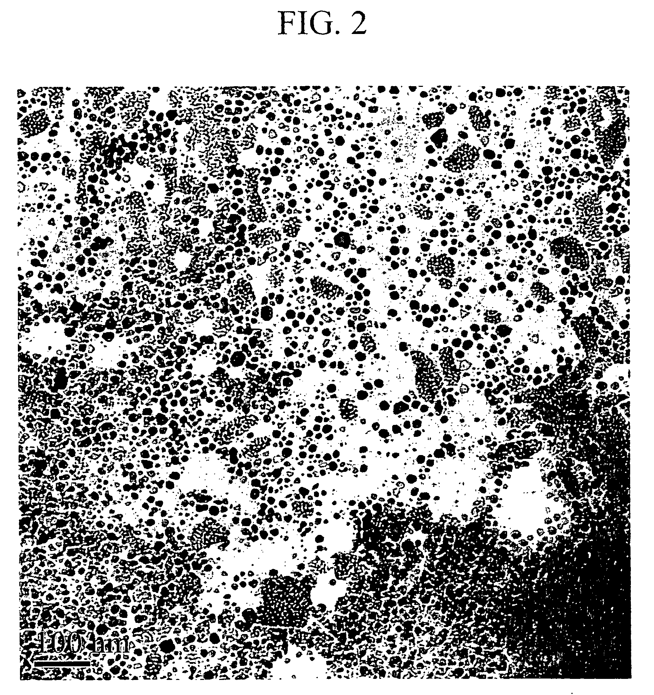

The following equipment was used in the examples.
¹H-NMR: JEOL Ltd., AL300, 300 Hz
Particle diameter measurement: Otsuka Electronics Co., Ltd., FPAR-1000
TEM micrographs: JEOL Ltd., JEM-200CX (Fig. 1), JEOL Ltd., JEM-2200FS (Fig. 2)
TGA measurement: SII Nano Technology Inc., TG/DTA6300
Plasmon absorption spectrum: Hitachi, Ltd., UV-3500
Dialysis: Spectrum Corp., Spectra/Por RC Dialysis Tube, MWC03500

### Synthesis of Polymer Compound

### Synthesis Example 1 - Synthesis of Polymer Compound (X-1) Having PEG-Linear PEI-PBEI Structure

### 1-1 [Tosylation of Polyethylene Glycol]

A solution in which 4.9 g (25.5 mmol) of tosyl chloride were dissolved in 15 g of chloroform was added to a solution wherein a mixture of 10 g (5.1 mmol) of PEGM (number average molecular weight (Mn): 2000), 15 g of chloroform and 4 g (51 mmol) of pyridine were mixed followed by allowing to react for 4 hours at 40°C. Following completion of the reaction, the reaction solution was diluted by adding 30 g of chloroform followed by washing twice with 300 g of 2.5 mol/L hydrochloric acid, twice with 300 g of 10% aqueous sodium hydrogen carbonate solution and twice with 300 g of water. The resulting chloroform solution was dried using sodium sulfate followed by filtering and concentrating with an evaporator. This was then added to hexane while stirring to precipitate followed by vacuum-drying. The yield was 81%. As a result of assigning the peaks of the ¹H-NMR spectrum (2.4 ppm: methyl group in tosyl group, 3.3 ppm: methyl group on PEGM end, 3.6 ppm: EG chain of PEG, 7.3 to 7.8 ppm: benzene ring in tosyl group), the polyethylene glycol was confirmed to have been tosylated on one end thereof.

### 1-2 [Living Cationic Polymerization]

1.5 g (0.71 mmol) of the single-end-tosylated polyethylene glycol (abbreviated as PEG-Ts) obtained in 1-1 above were mixed with 3 ml (34 mmol) of MOZ and 30 ml of DMA in a nitrogen atmosphere and sealed followed by allowing to react for 22 hours at 100°C. Continuing, 4.7 g (34 mmol) of POZ were added and sealed followed by stirring for 111 hours at 100°C.

After cooling the resulting reaction solution, the reaction solution was added to a mixed solvent of 150 g of ethyl acetate and 150 g of hexane to precipitate. After decanting, the precipitate was dissolved in 15 g of methanol and re-precipitated in a mixed solvent of 150 g of ethyl acetate and 150 g of hexane followed by filtering and vacuum-drying at 80°C. The yield was 89%.

As a result of assigning the peaks of the ¹H-NMR spectrum (2.1 ppm: acetyl group of PAEI, 3.4 ppm: CH₂CH₂ of PAEI and PBEI, 3.6 ppm: PEG, 7.0 to 7.7 ppm: benzoyl group of PBEI), the resulting product was confirmed to be polymer compound (1) having a PEG-PAEI-PBEI structure.

### 1-3 [Acid Hydrolysis Reaction]

1.7 g of the polymer compound (1) obtained in 1-2 above (acetylethyleneimine unit, abbreviated as AEI, 5.7 mmol) were dispersed in 3.5 g of 5 mol/L hydrochloric acid (HCl: 17.1 mmol) and allowed to react for 10 hours at 90°C. After cooling, the reaction solution was added to 200 g of acetone and the resulting precipitate was filtered and dissolved in 10 g of water. The resulting solution was again added to 200 g of acetone and the resulting precipitate was filtered. The precipitate was then vacuum-dried at 60°C to obtain a polymer compound having a PEG-linear PEI(HCl)-PBEI structure. The yield was 90%. As a result of assigning the peaks of the ¹H-NMR spectrum, the structure of the product was confirmed since the peak originating in the acetyl group at 2.1 ppm was no longer present and the like.

### 1-4 [Ammonia Treatment]

After dispersing 1.6 g of the polymer compound having a PEG-linear PEI(HCl)-PBEI structure obtained in 1-3 above in 5 g of water, the dispersion was placed in a dialysis tube and dialyzed against 0.5% ammonia water followed by continuing to dialyze in water. Ethanol was added to the dispersion extracted from the dialysis tube, the solvent was distilled off with an evaporator, and the resulting product was vacuum-dried for 15 hours at 80°C to obtain polymer compound (X-1) having a PEG-linear PEI-PBEI structure.

When 10 mg of the resulting polymer compound (X-1) (ethyleneimine unit: 0.039 mmol) were dispersed in 5 g of water and heated, a dispersoid having a mean particle diameter of about 100 nm was confirmed to have been obtained.

### Synthesis Example 2 - Synthesis of Polymer Compound (X-2) Having PEG-PEI-BisAEP Structure

### 2-1 [Tosylation of EP]

A solution in which 7.5 g (39.5 mmol) of tosyl chloride were dissolved in 15 g of chloroform was added to a solution wherein 2 g of bisphenol A epoxy resin (DIC Corp., EPICLON AM-040-P, epoxy groups: 7.9 mmol), 10 g of chloroform and 6.2 g (79 mmol) of pyridine were mixed followed by allowing to react for 4 hours at 40°C. Following completion of the reaction, the reaction solution was diluted by adding 20 g of chloroform followed by washing twice with 100 g of 2.5 mol/L hydrochloric acid, twice with 100 g of 10% aqueous sodium hydrogen carbonate solution and twice with 100 g of water. The resulting chloroform solution was dried using sodium sulfate followed by filtering and concentrating with an evaporator. This was then added to hexane to precipitate followed by vacuum-drying. The yield was 91%. As a result of assigning the peaks of the ¹H-NMR spectrum (1.6 ppm: methyl group of BisA skeleton in EPOP, 2.4 ppm: methyl group in tosyl group, 6.6 to 7.3 ppm: hydrogen of phenylene of BisA skeleton in EPOP, 7.3 to 7.8 ppm: benzene ring in tosyl group), the epoxy resin was confirmed to have been tosylated.

### 2-2 [Living Cationic Polymerization of MOZ]

0.30 g (tosyl group: 0.71 mmol) of the tosylated BisAEP (abbreviated as BisAEP-Ts) obtained in 2-1 above were mixed with 3 ml (34 mmol) of MOZ and 30 ml of DMA in a nitrogen atmosphere and sealed followed by allowing to react for 86 hours at 100°C.

### 2-3 [PEG Condensation Reaction]

2.78 g (1.42 mmol) of PEGM (Mn: 2000) and 0.49 g (3.55 mmol) of potassium carbonate were added to the reaction solution obtained in 2-2 above followed by allowing to react for 48 hours at 100°C. The reaction solution was then re-precipitated in a mixed solvent of ethyl acetate and hexane (1/1 (wt/wt)), washed and filtered followed by vacuum-drying at 80°C.

As a result of assigning the peaks of the ¹H-NMR spectrum (1.6 ppm: methyl group of BisAEP, 2.1 ppm: acetyl group of PAEI, 3.4 ppm: CH₂CH₂ of PAEI, 3.6 ppm: PEG, 7.0 to 7.7 ppm: phenyl group of BisAEP), the product was confirmed to be polymer compound having a PEG-PAEI-BisAEP structure.

### 2-4 [Acid Hydrolysis Reaction]

2.0 g of the polymer compound having a PEG-PAEI-BisAEP structure obtained in 2-3 above (AEI: 15.2 mmol) were dispersed in 4.57 g of 5 mol/L hydrochloric acid (HCl: 22.8 mmol) and allowed to react for 10 hours at 90°C. After cooling, the reaction solution was added to 100 g of acetone and the resulting precipitate was filtered and dissolved in 10 g of water. The resulting solution was again re-precipitated by adding to 100 g of acetone and the resulting precipitate was filtered. The precipitate was then vacuum-dried at 80°C to obtain a polymer compound having a PEG-linear PEI(HCl)-BisAEP structure. The yield was 92%. As a result of assigning the peaks of the ¹H-NMR spectrum, the structure of the product was confirmed since the peak originating in the acetyl group at 2.1 ppm was no longer present.

### 2-5 [Ammonia Treatment]

The polymer compound having a PEG-linear PEI(HCl)-BisAEP structure obtained in 2-4 above was dissolved in 5 g of water and dialyzed against 0.5% ammonia water. The solution was continued to be dialyzed in water and the water was replaced five times. Subsequently, ethanol was added to the resulting dispersion, the solvent was distilled off with an evaporator, and the resulting product was vacuum-dried for 15 hours at 80°C to obtain polymer compound (X-2) having a PEG-linear PEI-BisAEP structure.

### Synthesis Example 3 - Synthesis of Polymer Compound (X-3) Having PPEI-Linear PEI-BisAEP Structure

### 3-1 [Tosylation of EP]

BisAEP-Ts was obtained in the same manner as Synthesis Example 2-1.

### 3-2 [Living Cationic Polymerization of MOZ and EOZ]

0.30 g (tosyl group: 0.71 mmol) of the BisAEP-Ts obtained above were mixed with 3 ml (34 mmol) of MOZ and 30 ml of DMA in a nitrogen atmosphere and sealed followed by allowing to react for 86 hours at 100°C. After cooling, 4.7 g (34 mmol) of EOZ were added and sealed followed by stirring for 91 hours at 100°C. The resulting reaction solution was added to a mixed solvent of 150 g of ethyl acetate and 150 g of hexane to precipitate. After decanting, the obtained precipitate was dissolved in 10 g of methanol and re-precipitated by adding to a mixed solvent of 150 g of ethyl acetate and 150 g of hexane. The precipitate was then filtered and vacuum-dried at 80°C. The yield was 94%.

As a result of assigning the peaks of the ¹H-NMR spectrum (1.1 ppm: methyl group of PPEI, 2.1 ppm: acetyl group of PAEI, 2.4 ppm: CH₂ of PPEI, 3.4 ppm: CH₂CH₂ of PPEI and PAEI, 7.0 to 7.7 ppm: phenyl groups of BisAEP), the resulting product was confirmed to be polymer compound having a PPEI-PAEI-BisAEP structure.

### 3-3 [Acid Hydrolysis Reaction]

2.0 g of the polymer compound having a PPEI-PAEI-BisAEP structure obtained in 3-2 above (AEI: 15.3 mmol) were dispersed in 4.59 g of 5 mol/L hydrochloric acid (HCl: 22.9 mmol) and stirred for 10 hours at 90°C.

After cooling, the reaction solution was added to 100 g of acetone and the resulting precipitate was filtered and dissolved in 10 g of water. The resulting solution was again added to 100 g of acetone and the resulting precipitate was filtered followed by vacuum-drying at 80°C to obtain a polymer compound having a PPEI-linear PEI(HCl)-BisAEP structure. The yield was 85%. Furthermore, as a result of assigning the peaks of the ¹H-NMR spectrum, the structure of the product was confirmed since the peak originating in the acetyl group at 2.1 ppm was no longer present.

### 3-4 [Ammonia Treatment]

A solution obtained by dissolving all of the polymer compound having a PPEI-linear PEI(HCl)-BisAEP structure obtained in 3-3 above in 5 g of water was dialyzed against 0.5% ammonia water followed by continuing to dialyze in water, and the water was replaced 5 times. Subsequently, ethanol was added to the resulting dispersion, the solvent was distilled off with an evaporator, and the resulting product was vacuum-dried for 15 hours at 80°C to obtain polymer compound (X-3) having a PPEI-linear PEI-BisAEP structure.

### Synthesis Example 4 - Synthesis of Polymer Compound (X-4) Having PVAL-Linear PEI-PBEI Structure

### 4-1 [Synthesis of Polymer Compound Having PBEI-PAE1-Ts Structure]

0.127 g (0.68 mmol) of methyl tosylate, 4.7 ml (34 mmol) of POZ and 30 ml of DMA were mixed in a nitrogen atmosphere. After sealing, the reactants were allowed to react for 22 hours at 100°C. After cooling, 3.0 ml (34 mmol) of MOZ were added. After sealing, the reactants were allowed to react for 111 hours at 100°C. After cooling, the resulting reaction solution was added to a mixed solvent of 150 g of ethyl acetate and 150 g of hexane to precipitate. After decanting, the precipitate was dissolved in 10 g of methanol. After re-precipitating by again adding a mixed solvent of 150 g of ethyl acetate and 150 g of hexane, the precipitate was filtered and vacuum-dried at 80°C. The yield was 81%.

As a result of assigning the peaks of the ¹H-NMR spectrum (2.1 ppm: methyl group of PAEI, 3.4 ppm: CH₂CH₂ of PBEI and PAEI, 7. 0 to 7. 7 ppm: benzoyl group of PBEI), the product was confirmed to be a polymer compound having a PBEI-PAEI-Ts structure.

### 4-2 [Condensation Reaction Between Partially Saponified PVAC and Polymer Compound Having PAEI-PBEI-Ts Structure]

After dropping in 1.97 g (9.19 mmol) of sodium acetate to a solution obtained by dissolving 15.8 g of PVAC (Mw: 12,800) (acetyl group: 184 mmol) in 30 ml of DMA over the course of 20 minutes, the solution was allowed to react for 0.5 hours. A solution containing 5.4 g of the polymer compound having a PBEI-PAEI-Ts structure synthesized in 4-1 above dissolved in 10 ml of DMA was dropped into the above solution over the course of 20 minutes followed by allowing to react for 12 hours at 50°C.

After cooling, the resulting reaction solution was added to a mixed solvent of 100 g of ethyl acetate and 200 g of hexane to precipitate. After decanting, the precipitate was dissolved in 15 g of methanol followed by re-precipitating by adding to a mixed solvent of 100 g of ethyl acetate and 200 g of hexane, filtering and vacuum-drying at 80°C. The yield was 94%.

As a result of assigning the peaks of the ¹H-NMR spectrum (1.9 ppm: acetyloxy group of PVAC, 2.2 ppm: acetyl group of PAEI, 3.4 ppm: CH₂CH₂ of PAEI and PBEI, 4.8 ppm: CH of main chain of PVAC, 7.0 to 7.7 ppm: benzoyl group of PBEI), the product was confirmed to be polymer compound having a PVAC-PAEI-PBEI structure.

### 4-3 [Acid Hydrolysis Reaction]

19 g of the polymer compound having a PVAC-PAEI-PBEI structure obtained in 4-2 above were dispersed in 80 g of 5 mol/L hydrochloric acid and allowed to react for 6 hours at 90°C.

After cooling, the reaction solution was added to 100 g of acetone and the resulting precipitate was filtered and dissolved in 10 g of water. The resulting solution was again re-precipitated by adding to 100 g of acetone and the resulting precipitate was filtered followed by vacuum-drying at 80°C to obtain a polymer compound having a PVAL-linear PEI(HCl)-PBEI structure. The yield was 82%.

As a result of assigning the peaks of the ¹H-NMR spectrum, the product was confirmed to be a polymer compound having a PVAL-linear PEI(HCl)-PBEI structure since the peak originating in the acetyl group at 2.2 ppm and the peak originating in the main chain CH of PVAC at 4.8 ppm were no longer present, while the intensity of the peak originating in the main chain CH of PVAL at 3.8 ppm had increased.

### 4-4 [Ammonia Treatment]

8.6 g of the polymer compound having a PVAL-linear PEI(HCl)-PBEI structure obtained in 4-3 above were dissolved in 5 g of water, placed in a dialysis tube and dialyzed against 0.5% ammonia water followed by continuing to dialyze in water and replacing the water five times. Subsequently, ethanol was added to the dispersion removed from the dialysis tube, the solvent was distilled off with an evaporator, and the resulting product was vacuum-dried for 15 hours at 80°C to obtain polymer compound (X-4) having a PVAL-linear PEI-PBEI structure.

### Synthesis Example 5 - Synthesis of Polymer Compound (X-5) Having a PEG-Branched PEI-BisAEP Structure

### 5-1 [Synthesis of Tosylated Polyethylene Glycol]

A solution wherein a mixture of 150 g (30 mmol) of PEGM (number average molecular weight (Mn) : 5000, Aldrich Corp.) and 24 g (300 mmol) of pyridine were dissolved in 150 ml of chloroform, and a solution wherein 29 g (150 mmol) of tosyl chloride and 30 ml of chloroform were mixed uniformly, were respectively prepared.

The toluene solution of tosyl chloride was dropped into the mixed solution of PEGM and pyridine while stirring at 20°C. Following completion of dropping, the solutions were allowed to react for 2 hours at 40°C. Following completion of the reaction, the resulting solution was diluted by adding 150 ml of chloroform and after washing with 250 ml of 5% aqueous HCl solution (340 mmol), the solution was washed with saturated saltwater and water. After drying the resulting chloroform solution using sodium sulfate, the solvent was distilled off with an evaporator and dried. The yield was 100%. As a result of assigning the peaks of the ¹H-NMR spectrum (2.4 ppm: methyl group in tosyl group, 3.3 ppm: methyl group on end of PEGM, 3.6 ppm, EG chain of PEG, 7.3 to 7.8 ppm: benzene ring in tosyl group), the product was confirmed to be tosylated polyethylene glycol.

### 5-2 [Synthesis of Polymer Compound Having PEG-Branched PEI Structure]

After dissolving 23.2 g (4.5 mmol) of the tosylated polyethylene glycol obtained in 5-1 above and 15.0 g (1.5 mmol) of branched polyethyleneimine (Nippon Shokubai Co., Ltd., Epomin EP200) in 180 ml of DMA, 0.12 g of potassium carbonate were added and allowed to react for 6 hours at 100°C in a nitrogen atmosphere. Following completion of the reaction, a solid residue was removed and a mixed solvent of 150 ml of ethyl acetate and 450 ml of hexane was added to obtain a precipitate. The precipitate was dissolved in 100 ml of chloroform and then re-precipitated by again adding a mixed solvent of 150 ml of ethyl acetate and 450 ml of hexane. The precipitate was then filtered and dried under reduced pressure. As a result of assigning the peaks of the ¹H-NMR spectrum (2.3 to 2.7 ppm: ethylene of branched PEI, 3.3 ppm: methyl group on end of PEG, 3.6 ppm: EG chain of PEG), the product was confirmed to be a polymer compound having a PEG-branched PEI structure. The yield was 99%.

### 5-3 [Modification of Epoxy Resin]

After dissolving 37.4 g (20 mmol) of EPICLON AM-040-P and 2.72 g (16 mmol) of 4-phenylphenol in 100 ml of DMA, 0.52 ml of a 65% ethyl acetate triphenyl phosphonium ethanol solution were added followed by allowing to react for 6 hours at 120°C in a nitrogen atmosphere. After allowing to cool on standing, the solution was dropped into an excess of water and the resulting precipitate was further washed with an excess of water. The resulting precipitate was then filtered and then dried under reduced pressure to obtain modified bisphenol A epoxy resin. The yield of the resulting product was 100%.

As a result of measuring the ¹H-NMR spectrum and examining the integrated peak ratio of the epoxy peaks, 0.95 epoxy rings were determined to be remaining per single molecule of bisphenol A epoxy resin, and the resulting modified epoxy resin was confirmed to be a monofunctional epoxy resin having a bisphenol A skeleton.

### 5-4 [Synthesis of Polymer Compound (X-5)]

20 g (0.8 mmol) of the polymer compound having a PEG-branched PEI structure obtained in 5-2 above were dissolved in 150 ml of methanol, and a solution containing 4.9 g (2.4 mmol) of the bisphenol A monofunctional epoxy resin obtained in 5-3 above dissolved in 50 ml of acetone was dropped into the above methanol solution in a nitrogen atmosphere followed by allowing to react by stirring for 2 hours at 50°C. Following completion of the reaction, the solvent was distilled off under reduced pressure and then dried under reduced pressure to obtain polymer compound (X-5) having a PEG-branched PEI-BisAEP structure. The yield was 100%.

30 mg of the polymer compound (X-5) obtained in 5-4 above were added to 10 ml of water and dispersed by stirring. Measurement of the particle diameter distribution in this dispersion by light scattering confirmed the dispersion to have a mean particle diameter of 110 nm and that micelles had formed satisfactorily in water.

### Synthesis Example 6 - Synthesis of Polymer Compound (X-6) Having PEG-Branched PEI-Naphthalene EP Structure

### 6-1 [Synthesis of Tosylated Polyethylene Glycol]

A solution wherein 100 g (50 mmol) of PEGM (Mn: 2000, Aldrich Corp.) and 40 g (500 mmol) of pyridine were mixed in 100 ml of chloroform, and a solution wherein a uniform mixture of 48 g (250 mmol) of tosyl chloride and 150 ml of chloroform were mixed uniformly, were respectively prepared.

A toluene solution of tosyl chloride was dropped into the mixed solution of PEGM and pyridine while stirring at 20°C. Following completion of dropping, the solutions were allowed to react for 2 hours at 40°C. Following completion of the reaction, the resulting solution was diluted by adding 200 ml of chloroform and after washing with 420 ml of 5% aqueous HCl solution (570 mmol), the solution was washed with saturated saltwater and water. After drying the resulting chloroform solution using sodium sulfate, the solvent was distilled off with an evaporator and dried. The yield was 100%. As a result of assigning the peaks of the ¹H-NMR spectrum (2.4 ppm: methyl group in tosyl group, 3.3 ppm: methyl group on end of PEGM, 3.6 ppm, EG chain of PEG, 7.3 to 7.8 ppm: benzene ring in tosyl group), the product was confirmed to be tosylated polyethylene glycol.

### 6-2 [Synthesis of Polymer Compound Having PEG-Branched PEI Structure]

After dissolving 14.9 g (6.9 mmol) of the tosylated polyethylene glycol obtained in 6-1 above and 57.5 g (2.3 mmol) of branched polyethyleneimine (Aldrich Corp., weight average molecular weight (Mw): 25000) in 300 ml of DMA, 0.24 g of potassium carbonate were added and allowed to react for 6 hours at 100°C in a nitrogen atmosphere. Following completion of the reaction, a solid residue was removed and a mixed solvent of 250 ml of ethyl acetate and 750 ml of hexane was added to obtain a precipitate. The precipitate was dissolved in 150 ml of chloroform and then re-precipitated by again adding a mixed solvent containing 250 ml of ethyl acetate and 750 ml of hexane. The precipitate was then filtered and dried under reduced pressure. As a result of assigning the peaks of the ¹H-NMR spectrum (2.3 to 2.7 ppm: ethylene of branched PEI, 3.3 ppm: methyl group on end of PEG, 3. 6 ppm: EG chain of PEG), the product was confirmed to be a polymer compound having a PEG-branched PEI structure. The yield was 99%.

### 6-3 [Modification of Epoxy Resin]

After dissolving 44.5 g (80 mmol) of EPICLON HP-4700 (DIC Corp., naphthalene tetrafunctional epoxy resin) and 29.9 g (176 mmol) of 4-phenylphenol in 200 ml of DMA, 1.36 ml of a 65% ethyl acetate triphenyl phosphonium ethanol solution were added followed by allowing to react for 6 hours at 120°C in a nitrogen atmosphere. After allowing to cool on standing, the solution was dropped into 150 ml of water followed by washing the resulting precipitate twice with methanol and drying under reduced pressure at 60°C to obtain modified naphthalene epoxy resin. The yield was 100%.

As a result of measuring the ¹H-NMR spectrum and examining the integrated peak ratio of the epoxy peaks, 0.99 epoxy rings were determined to be remaining per single molecule of the naphthalene tetrafunctional epoxy resin and was confirmed to be a monofunctional naphthalene epoxy resin.

### 6-4 [Synthesis of Polymer Compound (X-6)]

4.65 g (0.5 mmol) of the polymer compound having a PEG-branched PEI structure obtained in 6-2 above were dissolved in 40 ml of methanol, and a solution containing 1.16 g (1.1 mmol) of the monofunctional epoxy resin having a naphthalene skeleton obtained in 6-3 above dissolved 15 ml of acetone was dropped into the above methanol solution in a nitrogen atmosphere followed by allowing to react for 2 hours at 50°C while stirring. Following completion of the reaction, the solvent was distilled off under reduced pressure and then dried under reduced pressure to obtain polymer compound (X-6) having a PEG-branched PEI-naphthalene EP structure. The yield was 100%.

30 mg of the polymer compound (X-6) obtained in 6-4 above were added to 10 ml of water and dispersed by stirring. Measurement of the particle diameter distribution in this dispersion by light scattering confirmed the dispersoid thereof to have a mean particle diameter of 110 nm and that micelles had formed satisfactorily in water.

### Synthesis Example 7 - Synthesis of Polymer Compound (X-7) Having PEG-Branched PEI-PSt Structure

1.9 g of 2 mol/L hydrochloric acid and 1.92 g (18.4 mmol) of styrene monomer were added to a solution containing 1.22 g (0.049 mmol) of the polymer compound having a PEG-branched PEI structure obtaining in Synthesis Example 5-2 dissolved in 44 g of water followed by the addition of 0.45 g (5.0 mmol) of 70% t-butylhydroperoxide (THBP) while stirring at 80°C in a nitrogen atmosphere and allowing to react for 2 hours. After cooling, the solution was purified by dialysis to obtain polymer compound (X-7) having a PEG-branched PEI-PSt structure. The yield was 100%.

Measurement of particle diameter distribution by light scattering using an aqueous dispersion of the polymer compound (X-7) obtained in the above Synthesis Example 7 confirmed the dispersoid thereof to have a mean particle diameter of 121 nm and that micelles had formed satisfactorily in water.

### Synthesis Example 8 - Synthesis of Polymer Compound (X-8) Having a PEG-Branched PEI-Polypropylene Glycol-Skeleton Urethane Structure

### 8-1 [Synthesis of Polymer Compound (X-8) Having PEG-Branched PEI Structure]

Tosylated polyethylene glycol was obtained in the same manner as Synthesis Example 5-1 with the exception of using 60 g (30 mmol) of PEGM (Mw: 2000, Aldrich Corp.). Subsequently, a polymer compound having a PEG-branched PEI structure was obtained in the same manner as Synthesis Example 5-2 with the exception of using 9.7 g (4.5 mmol) of this tosylated polyethylene glycol.

### 8-2 [Synthesis of Polyethylene Glycol (PG)-Skeleton Urethane]

After dropping in 13.0 g (101 mmol) of dibutylamine into 20.1 g (50 mmol) of dipropylene glycol diglycidyl ether (EPICLON 705, DIC Corp.) over the course of 0.5 hours at 70°C in a nitrogen atmosphere, the solution was allowed to react for 7 hours at 90°C to obtain a double end-dibutylamino PG reaction solution. Next, the double end-dibutylamino PG reaction solution synthesized above was dropped into a mixed solvent containing 19.4 g (100 mmol) of diisocyanate, 0.04 g (0.1 mmol) of stannous octoate and 80 g of chloroform over the course of 0.5 hours at 40°C and an addition reaction was carried out for 5 hours at 50°C. Moreover, after dropping in 5.7 g (50 mmol) of cyclohexane-methanol over the course of 20 minutes at 40°C, an addition reaction was carried out for 5 hours at 50°C to obtain a solution of polypropylene glycol-skeleton urethane.

### 8-3 [Synthesis of Polymer Compound (X-8)]

16.0 g (1 mmol) of the polymer compound having a PEG-branched PEI structure obtained in 8-1 above were dissolved in 30 ml of chloroform, and a solution containing 2.76 g (2 mmol) of polypropylene glycol-skeleton urethane solution obtained in 8-2 above dissolved in 10 ml of chloroform was dropped into the above chloroform solution over the course of 10 minutes in a nitrogen atmosphere followed by allowed to react for 2 hours at 40°C while stirring. Following completion of the reaction, 340 g of mixed solvent of water and acetone (1:1, volume ratio) were added followed by distilling off the chloroform and acetone under reduced pressure to obtain an aqueous dispersion of polymer compound (X-8) having a PEG-branched PEI-polypropylene glycol-skeleton urethane structure. The yield was 100%.

Measurement of particle diameter distribution by light scattering using 10 ml of the aqueous dispersion of the polymer compound (X-8) obtained above confirmed the dispersoid thereof to have a mean particle diameter of 107 nm and that micelles had formed satisfactorily in water.

### Synthesis Example 9 - Synthesis of Polymer Compound (X-9) Having PEG-Branched PEI-Polycarbonate-Skeleton Urethane Structure

### 9-1 [Synthesis of Polycarbonate-Skeleton Urethane]

49.0 g (50 mmol) of polycarbonate diol were dropped into a mixed solution of 19.4 g (100 mol) of diisocyanate, 0.04 g (0.1 mmol) of stannous octoate and 100 g of chloroform over the course of 0.5 hours at 40°C in a nitrogen atmosphere and allowed to react for 5 hours at 50°C to obtain a double end-isocyanate

urethane reaction solution. Next, 5.7 g (50 mmol) of cyclohexane-methanol were dropped into the double end-isocyanate urethane reaction solution synthesized above over the course of 20 minutes at 40°C and allowed to react for 5 hours at 50°C to obtain a single end-isocyanate polycarbonate-skeleton urethane reaction solution.

### 9-2 [Synthesis of Polymer Compound (X-9)]

16.0 g (1 mmol) of the polymer compound having a PEG-branched PEI structure obtained in 8-1 above were dissolved in 30 ml of chloroform, and a solution containing 7.0 g (2 mmol) of the single end-isocyanate polycarbonate-skeleton urethane reaction solution obtained in 9-1 above dissolved in 10 ml of chloroform was dropped into the above chloroform solution over the course of 10 minutes in a nitrogen atmosphere and allowed to react for 2 hours at 40°C while stirring. Following completion of the reaction, 340 g of mixed solvent of water and acetone (1:1, volume ratio) were added followed by distilling off the chloroform and acetone under reduced pressure to obtain an aqueous dispersion of polymer compound (X-9) having a PEG-branched PEI-polycarbonate-skeleton urethane structure. The yield was 100%.

Measurement of particle diameter distribution by light scattering using 10 ml of the aqueous dispersion of the polymer compound (X-9) obtained in 9-2 above confirmed the dispersoid thereof to have a mean particle diameter of 112 nm and that micelles had formed satisfactorily in water.

### Synthesis Example 10 - Synthesis of Polymer Compound (X-10) Having PEG-Linear PEI(HCl)-Tetraquis(phenol)ethane EP Structure

### 10-1 [Synthesis of Modified Epoxy Resin Having Hydroxyl Groups in Side Chain Thereof]

9.8 g (50 mEq, epoxy equivalent: 196) of tetraquis (phenol) ethane epoxy resin (jER1031S, tetraquis(glycidyloxyallyl) ethane), 11.9 g (70 mmol) of 4-phenylphenol, 0.21 ml (0.1 mol%) of 65% ethyl acetate triphenylphosphonium ethanol solution and 40 ml of DMA were allowed to react for 4 hours at 160°C in a nitrogen atmosphere. After allowing to cool on standing, the solution was dropped into 100 ml of water and the resulting precipitate was washed twice with methanol and dried under reduced pressure at 70°C to obtain a biphenylene-modified epoxy resin having hydroxyl groups in the side chain thereof. The amount of the resulting product was 17.6 g and the yield was 96%. The structure of the product was confirmed by assigning the peaks of the ¹H-NMR spectrum (δ (ppm): 7.53 to 7.25 (m), 7.13 to 6.60 (m), 4.50 to 3.75 (m)).

### 10-2 [Synthesis of Modified Epoxy Resin by Sulfonylation]

A chloroform (30 ml) solution containing 14.3 g (75 mmol) of p-toluenesulfonyl chloride was dropped into a solution containing 9.15 g (25 mEq) of the biphenyl-modified epoxy resin having hydroxyl groups in the side chain thereof synthesized in 10-1 above, 20 g (250 mmol) of pyridine and 30 ml of chloroform over the course of 30 minutes while stirring while cooling with ice in a nitrogen atmosphere. Following completion of dropping, the solution was further stirred for 4 hours at a bath temperature of 40°C. Following completion of the reaction, the solution was diluted by adding 60 ml of chloroform, followed by sequentially washing with 100 ml of 5% hydrochloric acid, aqueous saturated sodium hydrogen carbonate solution and aqueous saturated saltwater solution in this order, drying with magnesium sulfate, filtering and concentrating under reduced pressure. After washing the resulting solid several times with methanol, it was filtered and dried under reduced pressure at 70°C to obtain modified epoxy resin. The amount of the modified epoxy resin was 13 g and the yield was 98%. As a result of assigning the peaks of the ¹H-NMR spectrum (δ (ppm): 7.94 to 7.74 (m), 7.55 to 6.30 (m), 4.40 to 3.80 (m), 2.40 to 2.34 (m)), the resulting modified epoxy resin was confirmed to be a sulfonyl-modified epoxy resin having p-toluenesulfonyloxy groups in the side chain thereof.

### 10-3 [Living Radical Polymerization of Sulfonyl-Modified Epoxy Resin]

1.56 g (3 mEq) of the modified epoxy resin obtained in 10-2 above, 5.1 g (60 mmol) of MOZ and 40 ml of DMA were stirred for 24 hours at 100°C in a nitrogen atmosphere. After confirming the polymerization reaction by direct analysis by ¹H-NMR of the reaction mixture, 6.75 g (9 mmol) of PEGM (Mn: 750) and 4.1 g (30 mmol) of potassium carbonate were added to the reaction mixture followed by stirring for 24 hours at 100°C in a nitrogen atmosphere. Following completion of the reaction, a mixed solution of 100 ml of ethyl acetate and 100 ml of hexane was added to the resulting reaction mixture followed by vigorously stirring at room temperature, filtering out the solid and washing twice with ethyl acetate. Continuing, after adding 150 ml of chloroform to the solid and removing the undissolved potassium carbonate by filtration, the solution was concentrated under reduced pressure to obtain a light yellow solid. The yield was 90%. As a result of assigning the peaks of the ¹H-NMR spectrum, the resulting solid was confirmed to be a star-shaped polymer compound having a tetraquis (phenol) ethane epoxy resin residue for the core (δ: 6. 45 to 7. 90 ppm) and PAEI and PEG for the side chains (ethylenic hydrogens of PAEI (δ: 3. 36 ppm), ethylenic hydrogens of PEG (δ: 3. 62 ppm), propionylic hydrogens (δ: 2.50 ppm, 0.97 ppm) and acetylic hydrogens (δ: 2.00 ppm)), and have PAEI having a number average polymerization degree of 20 and PEG having a number average polymerization degree of 20 based on quantitative calculations on the reactants and products.

### 10-4 [Synthesis of Polymer Compound (X-10)]

A hydrolysis reaction was carried out by stirring 3.8 g of the resulting star-shaped polymer compound in 15.2 g of 5 mol/L hydrochloric acid for 6 hours at 90°C. After allowing to cool on standing, a reaction mixed solution containing a white precipitate that formed over time was added to about 150 ml of acetone and stirred for about 30 minutes at room temperature. Subsequently, the product solid was filtered, washed twice with acetone and dried under reduced pressure to obtain 3.3 g of a white solid. The yield was 99%. On the basis of ¹H-NMR analysis, there were no side chain acetylic hydrogens (δ: 2.00 ppm) in the PAEI due to the hydrolysis reaction, and the resulting solid was confirmed to be the polymer compound (X-10) having a PEG-linear PEI(HCl)-tetraquis(phenol)ethane EP structure.

30 mg of the resulting polymer compound (X-10) were added to 10 ml of water and dispersed by stirring. Measurement of the particle diameter distribution in this dispersion by light scattering confirmed the dispersion to have a mean particle diameter of 47.1 nm and that micelles had formed satisfactorily in water.

### Synthesis Example 11 - Synthesis of Polymer Compound (X-11) Having PEG-Linear PEI-Tetraquis(Phenol)Ethane EP Structure

2.0 g of the polymer compound (X-10) having a PEG-linear PEI(HCl)-tetraquis(phenol)ethane EP structure obtained in Synthesis Example 10 were dispersed in 5 g of water and placed in a dialysis tube followed by dialyzing overnight against 0.5% ammonia water and then dialyzing in water and replacing the water 5 to 6 times. Subsequently, ethanol was added to the dispersion in the dialysis tube, the solvent was distilled off with an evaporator followed by vacuum-drying for 15 hours at 80°C to obtain polymer compound (X-11) having a PEG-linear PEI-tetraquis(phenol)ethane EP structure.

30 mg of the resulting polymer compound (X-11) were added to 10 ml of water and dispersed by stirring. Measurement of the particle diameter distribution in this dispersion by light scattering confirmed the dispersoid thereof to have a mean particle diameter of 49.3 nm and that micelles had formed satisfactorily in water.

### Synthesis Example 12 - Synthesis of Polymer Compound (X-12) Having PEG-Linear PEI(HCl)-Naphthalene EP Structure

### 12-1 [Synthesis of Hydroxyl Group-Containing Epoxy Resin]

15.8 g (100 mEq) of EPICLON HP-4700, 23.8 g (140 mmol) of 4-phenylphenol, 0.42 ml (0.1 mol%) of 65% ethyl acetate triphenyl phosphonium ethanol solution and 80 ml of DMA were

allowed to react for 6 hours at 120°C in a nitrogen atmosphere. After allowing to cool on standing, the mixture was dropped into 200 ml of water and the resulting precipitate was washed twice with methanol and dried under reduced pressure at 70°C to obtain a modified epoxy resin having biphenyl groups as well as hydroxyl groups bonded to secondary carbon atoms. The amount of the resulting product was 31.8 g and the yield was 97%.

The peaks of the ¹H-NMR spectrum of the resulting modified epoxy resin (δ (ppm) : 7.73 to 6.80 (m), 4.89 (s), 4.50 to 3.85 (m)) were assigned to confirm the structure of the product.

### 12-2 [Sulfonylation of Modified Epoxy Resin]

A chloroform (60 ml) solution containing 28.6 g of p-toluenesulfonyl chloride was dropped into a solution containing 16.40 g (50.0 mEq) of the modified epoxy resin obtained in 12-1 above, 40.0 g (500 mmol) of pyridine and 60 ml of chloroform over the course of 30 minutes while stirring and cooling with ice in a nitrogen atmosphere. Following completion of dropping, the solution was further stirred for 4 hours at a bath temperature of 40°C. Following completion of the reaction, the solution was diluted by adding 120 ml of chloroform. Continuing, after sequentially washing with 200 ml of 5% hydrochloric acid, aqueous saturated sodium hydrogen carbonate solution and aqueous saturated saltwater solution, the solution was dried with magnesium sulfate, filtered and concentrated under reduced pressure. After washing the resulting solid several times with methanol, it was filtered and dried under reduced pressure at 70°C to obtain a sulfonylated modified epoxy resin. The amount of the sulfonylated modified epoxy resin was 23.6 g and the yield was 98%.

The structure of the product was confirmed by ¹H-NMR (δ (ppm): 7.94 to 6.55 (m), 5.25 to 3.95 (m), 4.60 to 3.85 (m), 2.40 to 2.00 (m)).

### 12-3 [Living Radical Polymerization of Sulfonylated-Modified Epoxy Resin]

3.86 g (8.0 mEq) of the sulfonylated modified epoxy resin obtained in 12-2 above, 13.6 g (160 mmol) of MOZ and 60 ml of DMA were stirred for 18 hours at 100°C in a nitrogen atmosphere. Continuing, 6.0 g (8 mmol) of PEGM (Mn: 750), 2.8 g (20 mmol) of potassium carbonate and 30 ml of DMA were added followed by stirring for 24 hours at 100°C in a nitrogen atmosphere. Following completion of the reaction, a mixed solution of 100 ml of ethyl acetate 100 ml of hexane was added to the resulting reaction mixture followed by vigorously stirring, filtering out the solid and washing twice with ethyl acetate. Continuing, after adding 150 ml of chloroform to the solid and removing the undissolved potassium carbonate by filtration, the solution was concentrated under reduced pressure to obtain 10.5 g of a light yellow solid. As a result of analyzing by ¹H-NMR, the resulting solid was confirmed to be a star-shaped polymer compound having a modified epoxy resin having a dinaphthalene structure for the main skeleton and a polymer comprised of PAEI and PEGM having a number average degree of polymerization of 20 for the chain thereof (ethylene glycol hydrogens (δ: 3.57 ppm), ethylenic hydrogens (δ: 3.20 to 3.55 ppm), methoxy hydrogens (δ: 3.25 ppm), acetylic hydrogens (δ: 1.86 to 1.98 ppm)).

### 12-4 [Synthesis of Polymer Compound (X-12)]

A hydrolysis reaction was carried out by stirring 10.5 g of the star-shaped polymer compound obtained in 12-3 above in 32.5 g of 5 mol/L hydrochloric acid for 6 hours at 90°C. After allowing to cool on standing, a reaction mixed solution containing a white precipitate that formed over time was added to 150 ml of acetone and stirred for 30 minutes at room temperature. Subsequently, the product solid was filtered, washed twice with acetone and dried under reduced pressure to obtain 9.6 g of a white solid. On the basis of ¹H-NMR analysis, there were no side chain acetylic hydrogens (δ: 1.86 to 1.98 ppm) in the PAEI due to the hydrolysis reaction, and the resulting solid was confirmed to be the polymer compound (X-12) having a PEG-linear PEI(HCl)-naphthalene EP structure.

When 30 mg of the resulting polymer compound (X-12) were added to 10 ml of water and dispersed by stirring, a dispersion that was stable in water was obtained.

### Synthesis Example 13 - Synthesis of Polymer Compound (X-13) Having PEG-Linear PEI-Naphthalene EP Structure

2.0 g of the polymer compound (X-12) obtained in Synthesis Example 12 were dispersed in 5 g of water and placed in a dialysis tube followed by dialyzing overnight against 0.5% ammonia water and then dialyzing in water and replacing the water 5 to 6 times. Subsequently, the dispersion in the dialysis tube was removed followed by the addition of ethanol, distilling off the solvent with an evaporator and vacuum-drying for 15 hours at 80°C to obtain polymer compound (X-13) having a PEG-linear PEI-naphthalene EP structure. When 30 mg of the resulting polymer compound (X-13) were added to 10 ml of water and dispersed by stirring, a stable dispersion was obtained.

### Synthesis Example 14 - Synthesis of Polymer Compound (X-14) Having PEG-Linear PEI(HCl)-Naphthalene EP Structure

### 14-1 [Living Radical Polymerization of Sulfonyl-Modified Epoxy Compound]

1.93 g (4.0 mEq) of the sulfonylated modified epoxy resin obtained in Synthesis Example 12-2, 17.0 g (200 mmol) of MOZ and 60 ml of DMA were stirred for 18 hours at 100°C in a nitrogen atmosphere. Continuing, 8.0 g (8 mmol) of PEGM (Mn: 2,000) and 1.4 g (10 mmol) of potassium carbonate were added followed by stirring for 24 hours at 100°C in a nitrogen atmosphere. Following completion of the reaction, a mixed solution of 100 ml of ethyl acetate 100 ml of hexane was added to the resulting reaction mixture followed by stirring, filtering out the solid and washing twice with ethyl acetate. Continuing, after adding 150 ml of chloroform to the solid and removing the undissolved potassium carbonate by filtration, the solution was concentrated under reduced pressure to obtain 12.1 g of a light yellow solid. As a result of analyzing by ¹H-NMR, the resulting solid was confirmed to be a star-shaped polymer compound having a naphthalene tetrafunctional epoxy resin for the main skeleton, and having a polymer comprised of PAEI and PEGM having a number average degree of polymerization of 50 for the chain thereof (ethylene glycol hydrogens (δ: 3.57 ppm), ethylenic hydrogens (δ: 3. 20 to 3. 55 ppm), methoxy hydrogens (δ: 3.25 ppm), acetylic hydrogens (δ: 1.85 to 1.98 ppm)).

### 14-2 [Synthesis of Polymer Compound (X-14)]

A hydrolysis reaction was carried out by stirring 12.1 g of the star-shaped polymer compound obtained in 14-1 in 32.5 g of 5 mol/L hydrochloric acid for 6 hours at 90°C. After allowing to cool on standing, a reaction mixed solution containing a white precipitate that formed over time was added to 150 ml of acetone and stirred for 30 minutes at room temperature followed by filtering the product solid, washing twice with acetone and drying under reduced pressure to obtain 11.2 g of a white solid. On the basis of ¹H-NMR analysis, there were no side chain acetylic hydrogens (δ: 1.85 to 1.98 ppm) in the PAEI due to the hydrolysis reaction, and the resulting solid was confirmed to be the polymer compound (X-14) having a PEG-linear PEI(HCl)-naphthalene skeleton EP structure.

When 30 mg of the resulting polymer compound (X-14) were dispersed by adding 10 ml of water thereto and stirring, a dispersion that was stable in water was obtained.

### Synthesis Example 15 - Synthesis of Polymer Compound (X-15) Having PEG-Linear PEI-Naphthalene EP Structure

2.0 g of the polymer compound (X-14) obtained in Synthesis Example 14 were dispersed in 5 g of water and placed in a dialysis tube followed by dialyzing overnight against 0.5% ammonia water and then dialyzing in water and replacing the water 5 to 6 times. Subsequently, ethanol was added to the dispersion in the dialysis tube followed by distilling off the solvent with an evaporator and vacuum-drying for 15 hours at 80°C to obtain polymer compound (X-15) having a PEG-linear PEI-naphthalene EP structure.

When 30 mg of the resulting polymer compound (X-15) were dispersed by adding 10 ml of water thereto and stirring, a dispersion that was stable in water was obtained.

### Synthesis Example 16 - Synthesis of Polymer Compound (X-16) Having PEG-Linear PEI(HCl)-PSt Structure

### 16-1 [Living Radical Polymerization]

65 mg (0.42 mmol) of 2,2-bipyridyl, 60 mg (0.42 mmol) of copper bromide, 2.0 ml (17 mmol) of styrene, 2 ml of toluene and 47 µl (0.35 mmol) of 1-(bromoethyl)benzene were respectively mixed in a nitrogen atmosphere followed by sealing and allowing to react for 24 hours in an oil bath at 110°C.

The resulting reaction solution was diluted by adding 50 g of chloroform and after treating with an alumina column, the solution was concentrated with an evaporator and dropped into 100 g of ethanol. After filtering the resulting precipitate, the precipitate was washed twice with ethanol and vacuum-dried. The yield was 83%. As a result of analyzing the peaks of the ¹H-NMR spectrum (1.4 ppm: CH₂ of PSt main chain, 1.8 ppm: CH of PSt main chain, 4.4 ppm: CH adjacent to end bromine of PSt, 6. 3 to 7.3 ppm: phenyl group of PSt), the structure of the product was confirmed and single end-brominated-polystyrene was obtained.

### 16-2 [Living Cationic Polymerization]

1.3 g (0.24 mmol) of the single-end-brominated polystyrene obtained in 16-1 above and 1 ml (12 mmol) of MOZ were added to 10 ml of DMA in a nitrogen atmosphere followed by sealing and allowing to react for 24 hours in an oil bath at 100°C. The resulting reaction solution was added to 200 g of hexane to form a precipitate. After decanting, the precipitate was dissolved in 10 g of methanol followed by re-precipitating by again adding to 200 g of hexane. The precipitate was then filtered and vacuum-dried at 80°C. The yield was 70%. As a result of analyzing the peaks of the ¹H-NMR spectrum (1.5 ppm: CH₂ of PSt main chain, 1.8 ppm: CH of PSt main chain, 2.1 ppm: acetyl group of PAEI, 3.5 ppm: CH₂CH₂ of main chain of PAEI, 6.3 to 7.3 ppm: phenyl group of PSt), the resulting product was confirmed to be a polymer compound having a PAEI-PSt structure.

### 16-3 [Tosylation Reaction]

0.067 g (1.20 mmol) of potassium hydroxide were added to 5.8 g of the reaction solution of the polymer compound having a PAEI-PSt structure obtained in 16-2 above and stirred for 1 hour to convert the single end bromine to a hydroxyl group. This was then added to a mixed solution of 100 ml of ethyl acetate and 100 ml of hexane and stirred followed by filtering the solid and washing twice with ethyl acetate. The solid was further dispersed in 10 g of water and purified by dialysis. 20 g of acetone were added thereto followed by distilling off the solvent with an evaporator and drying. A solution containing 0.10 g (0.50 mmol) of p-toluenesulfonyl chloride in chloroform (30 ml) was dropped into a solution containing 1.61 g (0.168 mmol) of the resulting product, 0.13 g (1.68 mmol) of pyridine and 30 ml of chloroform over the course of 30 minutes in a nitrogen atmosphere while stirring and cooling with ice. Following completion of dropping, the solution was further stirred for 4 hours at a bath temperature of 40°C. Following completion of the reaction, 60 ml of chloroform were added to dilute the reaction liquid. Continuing, after sequentially washing with 100 ml of 5% hydrochloric acid, aqueous sodium hydrogen carbonate solution and saturated saltwater, the reaction liquid was dried with magnesium sulfate, filtered and concentrated under reduced pressure. After washing several times with methanol, the resulting solid was filtered and dried at 70°C under reduced pressure to obtain a polymer compound having single-end-tosylated PAEI-PSt structure.

### 16-4 [Condensation Reaction]

1.63 g (0.168 mmol) of the polymer compound having a single-end-tosylated PAEI-PSt structure obtained in 16-3 above, 0.32 g (0.168 mmol) of PEGM (Mn: 2000), 0.057 g (0.41 mmol) of potassium carbonate and 2 ml of DMA were mixed in a nitrogen atmosphere followed by stirring for 24 hours at 100°C. Following completion of the reaction, a mixed solution of 100 ml of ethyl acetate and 100 ml of hexane was added to the resulting reaction mixture and stirred followed by filtering the solid and washing twice with ethyl acetate. Continuing, 150 ml of chloroform were added to the solid and the undissolved potassium carbonate was removed by filtration followed by concentrating the solution under reduced pressure to obtain a light yellow solid. The yield was 50%. As a result of analyzing the peaks of the ¹H-NMR spectrum (1.5 ppm: CH₂ of PSt main chain, 1.8 ppm: CH of PSt main chain, 2.1 ppm: acetyl group of PAEI, 3.5 ppm: CH₂CH₂ of main chain of PAEI, 3.7 ppm: CH₂CH₂ of PEG, 6.3 to 7.3 ppm: phenyl group of PSt), the structure of the product was confirmed and a polymer compound having a PEG-PAEI-PSt structure was obtained.

### 16-5 [Acid Hydrolysis Reaction]

0.4 g (AEI: 1.8 mmol) of the polymer compound having a PEG-PAEI-PSt structure obtained in 16-4 above were dispersed in 2.2 g (HCl: 10.5 mmol) of 5 mol/L hydrochloric acid and stirred for 10 hours at 90°C. After cooling, the reaction solution was concentrated with an evaporator and the concentrate was added to 200 g of acetone, the resulting precipitate was filtered and then dissolved in 10 g of water. After re-precipitating in 200 g of acetone and filtering again, the precipitate was vacuum-dried at 60°C to obtain the target polymer compound (X-16) having a PSt-PEI (HCl)-PEG structure. The yield was 90%. As a result of assigning the peaks of the ¹H-NMR spectrum, the structure of the product was confirmed since the peak originating in the acetyl group at 2.1 ppm was no longer present.

30 mg of the resulting polymer compound (X-16) were dispersed by adding 10 ml of water and stirring. Measurement of the particle diameter distribution in this dispersion by light scattering confirmed the dispersoid thereof to have a mean particle diameter of 119 nm and that micelles had formed satisfactorily in water.

### Synthesis Example 17 - Synthesis of Polymer Compound (X-17) Having PEG-Linear PEI-PSt Structure

2.0 g of the polymer compound (X-16) obtained in Synthesis Example 16 were dispersed in 5 g of water and placed in a dialysis tube followed by dialyzing overnight against 0.5% ammonia water and then dialyzing in water and replacing the water 5 to 6 times. Subsequently, ethanol was added to the dispersion in the dialysis tube, the solvent was distilled off with an evaporator followed by vacuum-drying for 15 hours at 80°C to obtain polymer compound (X-11) having a PEG-linear PEI-PSt structure.

30 mg of the resulting polymer compound (X-17) were dispersed by adding 10 ml of water thereto and stirring. Measurement of the particle diameter distribution in this dispersion by light scattering confirmed the dispersoid thereof to have a mean particle diameter of 114 nm and that micelles had formed satisfactorily in water.

### Synthesis Example 18 - Synthesis of Polymer Compound (X-18) Having PEG-Linear PEI(HCl)-PSt Structure

### 18-1 [Living Radical Polymerization]

Polymerization was carried out in the same manner as Synthesis Example 16-1 with the exception of using 40 µl (0.35 mmol) of 2-(iodoethyl)benzene instead of the 1-(bromoethyl)benzene in the [Living Radical Polymerization] of Synthesis Example 16-1. The yield was 86%. As a result of analyzing the peaks of the ¹H-NMR spectrum (1.4 ppm: CH₂ of PSt main chain, 1.8 ppm: CH of PSt main chain, 3.9 ppm: CH adjacent to end iodine of PSt, 6.3 to 7.3 ppm: phenyl group of PSt), the resulting product was confirmed to be single-end-iodinated-polystyrene.

### 18-2 [Living Cationic Polymerization]

Polymerization was carried out in the same manner as Synthesis Example 16-2 with the exception of using the single-end-iodinated polystyrene obtained in Synthesis Example 18-1 instead of the single-end-brominated polystyrene in the [Living Cationic Polymerization] of Synthesis Example 16-2. Similar peaks as those for the results of Synthesis Example 16-2 were observed as a result of analyzing the ¹H-NMR spectrum.

### 18-3 [Condensation Reaction]

A condensation reaction was carried out in the same manner as Synthesis Example 16-3 with the exception of adding 5.8 g of the reaction solution following living cationic polymerization in the [Condensation Reaction] of Synthesis Example 18-3 to the reaction solution obtained in Synthesis Example 18-2. Similar peaks as those for the results of the [Condensation Reaction] of Synthesis Example 16-3 were observed as a result of analyzing the ¹H-NMR spectrum.

### 18-4 [Acid Hydrolysis Reaction]

A reaction was carried out in the same manner as the [Acid Hydrolysis Reaction] of Synthesis Example 16-3 with the exception of using 0.4 g of the polymer compound having a PEG-PAEI-PSt structure obtained in 18-3 above to obtain polymer compound (X-18) having a PEG-linear PEI(HCl)-PSt structure. The yield was 87%.

30 mg of the resulting polymer compound (X-18) were dispersed by adding 10 ml of water and stirring. Measurement of the particle diameter distribution in this dispersion by light scattering confirmed the dispersoid thereof to have a mean particle diameter of 121 nm and that micelles had formed satisfactorily in water.

### Synthesis Example 19 - Synthesis of Polymer Compound (X-19) Having PEG-Linear PEI-PSt Structure

2.0 g of the polymer compound (X-18) obtained in Synthesis Example 18 were dispersed in 5 g of water and placed in a dialysis tube followed by dialyzing overnight against 0.5% ammonia water and then dialyzing in water and replacing the water 5 times. Subsequently, ethanol was added to the dispersion in the dialysis tube, the solvent was distilled off with an evaporator followed by vacuum-drying for 15 hours at 80°C to obtain polymer compound (X-19) having a PEG-linear PEI-PSt structure.

30 mg of the resulting polymer compound (X-19) were dispersed by adding 10 ml of water thereto and stirring. Measurement of the particle diameter distribution in this dispersion by light scattering confirmed the dispersoid thereof to have a mean particle diameter of 107 nm and that micelles had formed satisfactorily in water.

### Synthesis Example 20 - Synthesis of Polymer Compound (X-20) Having PEG-Linear PEI(HCl)-PMMA Structure

### 20-1 [Living Radical Polymerization]

Polymerization was carried out in the same manner as Synthesis Example 16-1 with the exception of using 1.9 ml (17 mmol) of methyl methacrylate (MMA) instead of the 2.0 ml (17 mmol) of styrene in Synthesis Example 16-1 to obtain single-end-brominated poly(methyl methacrylate).

### 20-2 [Living Cationic Polymerization]

Polymerization was carried out in the same manner as Synthesis Example 16-2 with the exception of using 1.2 g (0.24 mmol) of the single-end-brominated poly(methyl methacrylate) obtained in Synthesis Example 20-1 instead of the 1.3 g (0.24 mmol) of single-end-brominated polystyrene in Synthesis Example 16-2 to obtain a polymer compound having a PAEI-PMMA structure.

### 20-3 [Tosylation Reaction]

A polymer compound having a single-end-tosylated PAEI-PMMA structure was obtained in the same manner as Synthesis Example 16-3 with the exception of using 5.8 g of the polymer compound having a PAEI-PMMA structure obtained in Synthesis Example 20-2 instead of the 5.8 g of the reaction solution of the polymer compound having a PAEI-PSt structure obtained in Synthesis

### Example 16-3.

### 20-4 [Condensation Reaction]

A polymer compound having PEG-PAEI-PMMA structure was obtained in the same manner as Synthesis Example 16-4 with the exception of using the polymer compound having a single-end-tosylated PAEI-PMMA structure obtained in Synthesis Example 20-3 instead of the polymer compound having a single-end-tosylated PAEI-PSt structure obtained in Synthesis Example 16-4. The yield was 52%. The structure of the product was confirmed by assigning the peaks of the ¹H-NMR spectrum in the same manner as Synthesis Example 16 (1.2 ppm: methyl group of PMMA, CH₂ of PMMA, (1.5 ppm, 2.0 ppm): CH₂ of PMMA main chain, 2.1 ppm: acetyl group of PAEI, 3.5 ppm: CH₂CH₂ of PAEI main chain, 3.6 ppm: methyl ester group of PMMA, 3.7 ppm: CH₂CH₂ of PEG).

### 20-5 [Acid Hydrolysis Reaction]

A reaction was carried out in the same manner as Synthesis Example 16-5 with the exception of using 0.4 g (AEI: 1.8 mmol) of the polymer compound having a PEG-PAEI-PMMA structure obtained in Synthesis Example 20-4 instead of the 0.4 g (AEI: 1.8 mmol) of the polymer compound having a PEG-PAEI-PSt structure obtained in Synthesis Example 16-5. The yield was 80%. As a result of assigning the peak of the ¹H-NMR spectrum (1.2 ppm: methyl group of PMMA, CH₂ of PMMA, (1.5 ppm, 2.0 ppm) : CH₂ of PMMA main chain, 3.5 ppm: CH₂CH₂ of PAEI main chain, 3.6 ppm: methyl ester group of PMMA, 3.7 ppm: CH₂CH₂ of PEG), the product was confirmed to be polymer compound (X-20) having a PEG-linear PEI(HCl)-PMMA structure.

30 mg of the resulting polymer compound (X-20) were dispersed by adding 10 ml of water thereto and stirring. Measurement of the particle diameter distribution in this dispersion by light scattering confirmed the dispersoid thereof to have a mean particle diameter of 129 nm and that micelles had formed satisfactorily in water.

### Synthesis Example 21 - Synthesis of Polymer Compound (X-21) Having PEG-Linear PEI-PMMA Structure

2.0 g of the polymer compound (X-20) obtained in Synthesis Example 20 were dispersed in 5 g of water and placed in a dialysis tube followed by dialyzing overnight against 0.5% ammonia water and then dialyzing in water and replacing the water 5 to 6 times. Subsequently, the dispersion was removed from the dialysis tube followed by the addition of ethanol, distilling off the solvent with an evaporator and vacuum-drying for 15 hours at 80°C to obtain polymer compound (X-21) having a PEG-linear PEI-PMMA structure.

30 mg of the resulting polymer compound (X-21) were dispersed by adding 10 ml of water thereto and stirring. Measurement of the particle diameter distribution in this dispersion by light scattering confirmed the dispersoid thereof to have a mean particle diameter of 116 nm and that micelles had formed satisfactorily in water.

### Example 1

9.0 mg (ethyleneimine (EI) unit: 0.039 mmol) of the polymer compound (X-1) obtained in Synthesis Example 1 were added to 5 g of water and dispersed by heating. The mean particle diameter of the dispersoid at this time was 100 nm. 0.8 mg (0.0019 mmol) of sodium tetrachloroaurate (III) dihydrate were added to this dispersion followed by allowing to stand undisturbed. Although the dispersion was light yellow immediately after mixing, the color changed over time and became reddish on the following day, eventually becoming a beautiful violet solution three days later. As a result of measuring the visible absorption spectrum thereof, a peak of the plasmon absorption spectrum was observed at 540 nm thereby confirming the formation of gold nanoparticles.

### Example 2

A procedure was carried out in the exact same manner as Example 1 with the exception of using silver nitrate instead of the sodium tetrachloroaurate (III) dihydrate in Example 1, and changing the mixed amount thereof to 1. 6 mg, 3.2 mg and 6.6 mg (0.0097 mmol, 0.019 mmol, 0.039 mmol). As a result of measuring the visible absorption spectrum, a peak was observed at 540 nm characteristic of silver nanoparticles, and the intensity thereof was confirmed to increase as the mixed amount of silver nitrate increased.

### Example 3

9.0 mg (EI unit: 0.039 mmol) of the polymer compound (X-1) obtained in Synthesis Example 1 were added to 0.25 g of methanol and dissolved by heating. This methanol solution was then dropped into 5 g of water. 0.8 mg (0.0019 mmol) of sodium tetrachloroaurate (III) dihydrate were then added to the resulting dispersion followed by dissolving by mixing while shaking gently and allowing to stand undisturbed. Although the solution was light yellow immediately after mixing, the color changed over time and became reddish on the following day, eventually becoming a beautiful violet solution three days later. As a result of measuring the visible absorption spectrum thereof, a peak of the plasmon absorption spectrum was observed at 540 nm thereby confirming the formation of gold nanoparticles.

### Example 4

A procedure was carried out in the exact same manner as Example 3 with the exception of changing the mixed amount of sodium tetrachloroaurate (III) dihydrate to 1. 5 mg, 3.1 mg and 4.6 mg (0.0039 mmol, 0.0077 mmol, 0.0116 mmol). As a result of measuring the visible absorption spectrum, peak intensity of the plasmon absorption spectrum at 540 nm was confirmed to increase as the mixed amount of sodium tetrachloroaurate (III) dehydrate increased.

### Example 5

A procedure was carried out in the exact same manner as Example 3 with the exception of using silver nitrate instead of the sodium tetrachloroaurate (III) dihydrate in Example 3, and changing the mixed amount thereof to 1.6 mg, 3.2 mg and 6.6 mg (0.0097 mmol, 0.019 mmol, 0.039 mmol). As a result of measuring the visible absorption spectrum, the intensity of a peak at 420 nm characteristic of silver nanoparticles was observed to increase in the plasmon absorption spectrum as the mixed amount of silver nitrate increased.

### Example 6

10 mg (EI unit: 0.039 mmol) of the polymer compound having a PEG-linear PEI(HCl)-PBEI structure obtained in Synthesis Example 1 were added to 5 g of water and dispersed by heating. 0.7 mg (0.0017 mmol) of sodium tetrachloroaurate (III) dihydrate were then added to this dispersion followed by dissolving by mixing while shaking gently and allowing to stand undisturbed. Although the dispersion was light yellow immediately after mixing, the color changed over time and became reddish on the following day, eventually becoming a beautiful violet solution seven days later. The resulting aqueous dispersion was stable, and a plasmon absorption spectrum peak was observed to be present at 540 nm as a result of measuring the visible absorption spectrum, thereby confirming the formation of gold nanoparticles.

### Example 7

3.0 mg (EI unit: 0.033 mmol) of the polymer compound (X-2) obtained in Synthesis Example 2 were added to 0.25 g of methanol and dissolved by heating. This methanol solution was dropped into 5 g of water. 0.7 mg (0.0017 mmol) of sodium tetrachloroaurate (III) dihydrate were then added to this dispersion followed by dissolving by mixing while shaking gently and allowing to stand undisturbed. Although the dispersion was light yellow immediately after mixing, the color changed over time and became reddish on the following day, eventually becoming a beautiful violet solution three days later. The resulting aqueous dispersion was stable, and a plasmon absorption spectrum peak was observed to be present at 540 nm as a result of measuring the visible absorption spectrum, thereby confirming the formation of gold nanoparticles. In addition, the gold nanoparticles were confirmed to be 20 nm or less according to the TEM micrograph of Fig. 1 following TEM observation.

### Example 8

7.5 mg (EI unit: 0.051 mmol) of the polymer compound (X-3) obtained in Synthesis Example 3 were added to 0.25 g of methanol and dissolved by heating. This methanol solution was dropped into 5 g of water. 1.0 mg (0.0026 mmol) of sodium tetrachloroaurate (III) dihydrate were then added to the resulting dispersion followed by dissolving by mixing while shaking gently and allowing to stand undisturbed. Although the dispersion was light yellow immediately after mixing, the color changed over time and became reddish on the following day, eventually becoming a beautiful violet solution three days later. The resulting aqueous dispersion was stable, and a plasmon absorption spectrum peak was observed to be present at 540 nm as a result of measuring the visible absorption spectrum, thereby confirming the formation of gold nanoparticles.

### Example 9

5.1 mg (EI unit: 0.018 mmol) of the polymer compound (X-4) obtained in Synthesis Example 4 were added to 0.25 g of methanol and dissolved by heating. This methanol solution was dropped into 5 g of water. 0.4 mg (0.00089 mmol) of sodium tetrachloroaurate (III) dihydrate were then added to this dispersion followed by dissolving by mixing while shaking gently and allowing to stand undisturbed. Although the dispersion was light yellow immediately after mixing, the color changed over time and became reddish on the following day, eventually becoming a beautiful violet solution three days later. The resulting aqueous dispersion was stable, and a plasmon absorption spectrum peak was observed to be present at 540 nm as a result of measuring the visible absorption spectrum, thereby confirming the formation of gold nanoparticles.

### Example 10

A solution 1A, in which 20 mg (EI unit: 0.15 mmol) of the polymer compound (X-5) obtained in Synthesis Example 5 were dissolved in 2.39 g of water, a solution 1B, in which 0.16 g (0.97 mmol) of silver nitrate were dissolved in 1. 30 g of water, and a solution 1C, in which 0.12 g (0.48 mmol) of sodium citrate were dissolved in 0.25 g of water, were respectively prepared. Solution 1B was added to solution 1A while stirring at 25°C followed by the addition of solution 1C. The dispersion gradually became dark brown. After stirring for 7 days, an aqueous dispersion was obtained by purifying by dialysis.

A portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles. In addition, the silver nanoparticles were determined to have a size of 20 nm or less based on the TEM micrograph of Fig. 2. After distilling off the solvent of the resulting aqueous dispersion of silver nanoparticles, measurement of the silver content by TGA yielded a value of 83%. In addition, the resulting aqueous dispersion of silver nanoparticles was not observed to exhibit cohesion or precipitation even after two months, and was confirmed to have superior storage stability.

### Example 11

An aqueous dispersion was obtained in the same manner as Example 10 with the exception of adding solution 1C to solution 1A followed by adding solution 1B. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 12

An aqueous dispersion was obtained in the same manner as Example 10 with the exception adding solution 1C to solution 1A, stirring for 7 days, adding solution 1B and then further stirring for 7 days. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 13

An aqueous dispersion was obtained in the same manner as Example 10 with the exception of preparing solution 1B by dissolving 0.008 g (0.048 mmol) of silver nitrate in 1.30 g of water and preparing solution 1C with 0.25 g of water. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 14

A solution 2A, in which 20 mg (EI unit: 0.15 mmol) of the polymer compound (X-6) obtained in Synthesis Example 6 were dissolved in 2.39 g of water, a solution 2B, in which 0.16 g (0.97 mmol) of silver nitrate were dissolved in 1.30 g of water, and a solution 2C, in which 0. 12 g (0.48 mmol) of sodium citrate were dissolved in 0.25 g of water, were respectively prepared. Solution 2B was added to solution 2A while stirring at 25°C followed by the addition of solution 2C. The dispersion gradually became dark brown. An aqueous dispersion was obtained after stirring for 7 days. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 15

An aqueous silver nitrate solution, in which 0.02 g (0.12 mmol) of silver nitrate were dissolved in 5.0 g of water, was added to 5.0 g (EI unit: 0.41 mmol) of an aqueous dispersion of the polymer compound (X-7) obtained in Synthesis Example 7 followed by stirring at 25°C. The dispersion gradually became light brown. The dispersion was purified by dialysis 7 days later to obtain an aqueous dispersion. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 16

An aqueous dispersion was obtained in the same manner as Example 10 with the exception of using a solution in which 2.29 g of water were added to 0.12 g (EI unit: 0.15 mmol) of an aqueous dispersion of the polymer compound (X-8) obtained in Synthesis Example 8 instead of solution 1A of Example 10. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 17

An aqueous dispersion was obtained in the same manner as Example 10 with the exception of using a solution in which 2.28 g of water were added to 0.12 g (EI unit: 0.15 mmol) of an aqueous dispersion of the polymer compound (X-9) obtained in Synthesis Example 9 instead of solution 1A of Example 10. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 18

A solution 3A, in which 10.9 mg (EI unit: 0.15 mmol) of the polymer compound (X-10) obtained in Synthesis Example 10 were dissolved in 2.39 g of water, a solution 3B, in which 0.16 g (0.97 mmol) of silver nitrate were dissolved in 1.30 g of water, and a solution 3C, in which 0.12 g (0.48 mmol) of sodium citrate were dissolved in 0.25 g of water, were respectively prepared. Solution 3B was added to solution 3A while stirring at 25°C followed by the addition of solution 3C. The dispersion gradually became dark brown. The dispersion was purified by dialysis after stirring for 7 days to obtain an aqueous dispersion.

A portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles. The resulting aqueous dispersion was not observed to exhibit cohesion or precipitation even after two months, and was confirmed to have superior storage stability.

### Example 19

An aqueous dispersion was obtained in the same manner as Example 18 with the exception of using a solution in which 14.5 mg (EI unit: 0.15 mmol) of the polymer compound (X-11) obtained in Synthesis Example 11 were dissolved in 2. 39 g of water instead of solution 3A in Example 18. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 20

An aqueous dispersion was obtained in the same manner as Example 18 with the exception of using a solution in which 10.8 mg (EI unit: 0.15 mmol) of the polymer compound (X-12) obtained in Synthesis Example 12 were dissolved in 2. 39 g of water instead of solution 3A in Example 18. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 21

An aqueous dispersion was obtained in the same manner as Example 18 with the exception of using a solution in which 14.4 mg (EI unit: 0.15 mmol) of the polymer compound (X-13) obtained in Synthesis Example 13 were dissolved in 2. 39 g of water instead of solution 3A in Example 18. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 22

An aqueous dispersion was obtained in the same manner as Example 18 with the exception of using a solution in which 10.3 mg (EI unit: 0.15 mmol) of the polymer compound (X-14) obtained in Synthesis Example 14 were dissolved in 2.39 g of water instead of solution 3A in Example 18. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 23

An aqueous dispersion was obtained in the same manner as Example 18 with the exception of using a solution in which 13.5 mg (EI unit: 0.15 mmol) of the polymer compound (X-15) obtained in Synthesis Example 15 were dissolved in 2.39 g of water instead of solution 3A in Example 18. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 24

A solution 4A, in which 14.5 mg (EI unit: 0.15 mmol) of the polymer compound (X-11) obtained in Synthesis Example 11 were dissolved in 2.39 g of water, and a solution 4B, in which 7.7 mg (0.045 mmol) of silver nitrate were dissolved in 1.55 g of water, were respectively prepared. Solution 4B was added to solution 4A while stirring at 25°C. The dispersion gradually became brown. The dispersion was purified by dialysis after stirring for 7 days to obtain an aqueous dispersion.

The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles. The resulting aqueous dispersion was not observed to exhibit cohesion or precipitation even after two months, and was confirmed to have superior storage stability.

### Example 25

An aqueous dispersion was obtained in the same manner as Example 24 with the exception of using a solution in which 13.5 mg (EI unit: 0.15 mmol) of the polymer compound (X-15) obtained in Synthesis Example 15 were dissolved in 2.39 g of water instead of solution 4A in Example 24. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 26

A solution 5A, in which 18.1 mg (EI unit: 0.15 mmol) of the polymer compound (X-16) obtained in Synthesis Example 16 were dissolved in 2.39 g of water, a solution 5B, in which 0.16 g (0.97 mmol) of silver nitrate were dissolved in 1. 30 g of water, and a solution 5C, in which 0.12 g (0.48 mmol) of sodium citrate were dissolved in 0.25 g of water, were respectively prepared. Solution 5B was added to solution 5A while stirring at 25°C followed by the addition of solution 5C. The dispersion gradually became dark brown. The dispersion was purified by dialysis after stirring for 7 days to obtain an aqueous dispersion.

A portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles. The resulting aqueous dispersion was not observed to exhibit cohesion or precipitation even after two months, and was confirmed to have superior storage stability.

### Example 27

An aqueous dispersion was obtained in the same manner as Example 26 with the exception of using a solution in which 27.9 mg (EI unit: 0.15 mmol) of the polymer compound (X-17) obtained in Synthesis Example 17 were dissolved in 2. 39 g of water instead of solution 5A in Example 26. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 28

An aqueous dispersion was obtained in the same manner as Example 26 with the exception of using a solution in which 18.1 mg (EI unit: 0.15 mmol) of the polymer compound (X-18) obtained in Synthesis Example 18 were dissolved in 2.39 g of water instead of solution 5A in Example 26. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 29

An aqueous dispersion was obtained in the same manner as Example 26 with the exception of using a solution in which 27.9 mg (EI unit: 0.15 mmol) of the polymer compound (X-19) obtained in Synthesis Example 19 were dissolved in 2.39 g of water instead of solution 5A in Example 26. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 30

An aqueous dispersion was obtained in the same manner as Example 26 with the exception of using a solution in which 17.8 mg (EI unit: 0.15 mmol) of the polymer compound (X-20) obtained in Synthesis Example 20 were dissolved in 2. 39 g of water instead of solution 5A in Example 26. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 31

An aqueous dispersion was obtained in the same manner as Example 26 with the exception of using a solution in which 27.3 mg (EI unit: 0.15 mmol) of the polymer compound (X-21) obtained in Synthesis Example 21 were dissolved in 2. 39 g of water instead of solution 5A in Example 26. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 32

A solution 6A, in which 27.9 mg (EI unit: 0.15 mmol) of the polymer compound (X-17) obtained in Synthesis Example 17 were dissolved in 2.39 g of water, and a solution 6B, in which 7.7 mg (0.045 mmol) of silver nitrate were dissolved in 1.55 g of water, were respectively prepared. Solution 6B was added to solution 6A while stirring at 25°C. The dispersion gradually became brown. The dispersion was purified by dialysis after stirring for 7 days to obtain an aqueous dispersion.

A portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles. The resulting aqueous dispersion was not observed to exhibit cohesion or precipitation even after two months, and was confirmed to have superior storage stability.

### Example 33

An aqueous dispersion was obtained in the same manner as Example 32 with the exception of using a solution in which 27.3 mg (EI unit: 0.15 mmol) of the polymer compound (X-21) obtained in Synthesis Example 21 were dissolved in 2.39 g of water instead of solution 6A in Example 32. The resulting aqueous dispersion was stable, and a portion of the resulting aqueous dispersion was sampled and a plasmon absorption spectrum peak was observed at 400 nm as a result of measuring the visible absorption spectrum of a 10-fold diluted solution thereof, thereby confirming the formation of silver nanoparticles.

### Example 34

An aqueous dispersion of a polymer dispersion was obtained in the same manner as Example 10 with the exception of preparing solution 1B by dissolving 0.018 g (0.048 mmol) of sodium tetrachloroplatinate (II) hydrate in 1.30 g of water and preparing solution 1C with 0.25 g of water. The solution gradually changed from the orange color of the sodium tetrachloroplatinate (II) to brown. The resulting aqueous dispersion was stable.

### Comparative Example 1

A solution wherein 3.0 g (1.5 mmol) of the bisphenol A monofunctional epoxy resin obtained in Synthesis Example 5 was dissolved in 60 ml of acetone was dropped into a solution wherein 5 g (0.5 mmol) of branched PEI (Nippon Shokubai Co. , Ltd., Epomin SP200) was dissolved in 150 ml of methanol in a nitrogen atmosphere followed by allowing to react by stirring for 2 hours at 50°C. Following completion of the reaction, a polymer compound having a BisAEP-branched PEI structure was obtained by drying under reduced pressure (yield: 100%).

30 mg of the polymer compound obtained above were dispersed in 10 ml of water by stirring. Measurement of particle diameter distribution in the liquid dispersion by light scattering confirmed the dispersion to have a mean particle diameter of 110 nm and that micelles had formed satisfactorily in water.

A solution 7A, in which 6.6 mg (EI unit: 0.097 mmol) of the polymer compound having a Bis AEP-branched PEI structure obtained above were dissolved in 2.39 g of water, a solution 7B, in which 0.16 g (0.97 mmol) of silver nitrate were dissolved in 1.30 g of water, and a solution 7C, in which 0.12 g (0.48 mmol) of sodium citrate were dissolved in 0.25 g of water, were respectively prepared. Solution 7B was added to solution 7A while stirring at 25°C followed by the addition of solution 7C. The dispersion gradually became dark brown. A precipitate subsequently formed and the dispersed components completely disappeared two days later. This indicates that the polymer compound having a BisAEP-branched PEI structure did not allow the metal nanoparticles to form a stable dispersion.

### Application Example 1

The liquid dispersion of silver nanoparticles obtained in Example 11 were concentrated by centrifugation, and 5 g of isopropyl alcohol (IPA) were added to 2 g of the concentrated layer and mixed. (The content of silver nanoparticles in the IPA dispersion was 14%.) The was no changed in the dispersion state and a stable IPA dispersion was obtained. The PA dispersion was casted on a glass substrate, and then it was heat-treated at 30 minutes at 200°C in a nitrogen atmosphere. Measurement of volume resistivity (Mitsubishi Chemical Corp., Loresta-GP MCP-T610) thereof yielded a value of 8.7 x 10⁻⁴ Ω· cm.

### INDUSTRIAL APPLICABILITY

The metal nanoparticle dispersion of the present invention enables metal nanoparticles to be stably dispersed in a medium for a long period of time, and can be used in an extremely wide range of fields such as catalysts, electronic materials, magnetic materials, optical materials, various types of sensors, colorants and medical testing applications. The production process of a metal nanoparticle dispersion of the present invention does not require hardly any complex steps or precise setting of conditions and the like, thereby making it highly advantageous as an industrial production process.

## Claims

1. A metal nanoparticle dispersion comprising: a dispersion of a polymer compound (X), which comprises a polyalkyleneimine chain (a), a hydrophilic segment (b) and a hydrophobic segment (c), wherein the polymer compound (X) has a structure in which the polyalkyleneimine chain (a) is bonded by the hydrophilic segment (b) and the hydrophobic segment (c), and metal nanoparticles (Y), wherein the hydrophilic segment (b) is a polyoxyalkylene chain, wherein the hydrophobic segment (c) is a residue of at least one compound selected from the group consisting of polystyrenes, poly(meth)acrylic acid esters, epoxy resins, polyurethanes, polycarbonates and polyacylalkyleneimines having a hydrophobic substituent and wherein the metal nanoparticles (Y) are at least one type of metal selected from the group consisting of silver, gold and platinum.

2. The metal nanoparticle dispersion according to claim 1, wherein the polyalkyleneimine chain (a) is a polyethylene-imine chain.

3. The metal nanoparticle dispersion according to any of claims 1 to 2, wherein the metal nanoparticles (Y) have a particle diameter of 1 to 50 nm.

4. The metal nanoparticle dispersion according to claim 1, wherein one or more of the metal nanoparticles (Y) are coordinated in the dispersion of the polymer compound (X).

5. A production process of a metal nanoparticle dispersion comprising:
forming a dispersion of a polymer compound (X), which comprises a polyalkyleneimine chain (a), a hydrophilic segment (b) and a hydrophobic segment (c), wherein the polymer compound (X) has a structure in which the polyalkyleneimine chain (a) is bonded by the hydrophilic segment (b) and the hydrophobic segment (c), in a solvent; and
adding a metal salt or metal ion solution to the dispersion to reduce metal ions and obtain metal nanoparticles (Y),
wherein the hydrophilic segment (b) is a polyoxyalkylene chain, wherein the hydrophobic segment (c) is a residue of at least one compound selected from the group consisting of polystyrenes, poly(meth)acrylic acid esters, epoxy resins, polyurethanes, polycarbonates and polyacylalkyleneimines having a hydrophobic substituent and wherein the metal nanoparticles (Y) are at least one type of metal selected from the group consisting of silver, gold and platinum.

6. The production process of a metal nanoparticle dispersion according to claim 5, wherein a reducing agent is used when reducing the metal ions.

## Patentansprüche

1. Metallnanopartikeldispersion, die umfasst: eine Dispersion einer Polymerverbindung (X), die eine Polyalkyleniminkette (a), ein hydrophiles Segment (b) und ein hydrophobes Segment (c) umfasst, wobei die Polymerverbindung (X) eine Struktur hat, in der die Polyalkyleniminkette (a) durch das hydrophile Segment (b) und das hydrophobe Segment (c) gebunden ist, und Metallnanopartikel (Y), wobei das hydrophile Segment (b) eine Polyoxialkylenkette ist, wobei das hydrophobe Segment (c) ein Rest von mindestens einer Verbindung, ausgewählt aus der Gruppe, bestehend aus Polystyrolen, Poly(meth)acrylsäureestern, Epoxyharzen, Polyurethanen, Polycarbonaten und Polyacylalkyleniminen, die einen hydrophoben Substituenten haben, ist, und wobei die Metallnanopartikel (Y) mindestens ein Typ an Metall, ausgewählt aus der Gruppe, bestehend aus Silber, Gold und Platin, sind.

2. Metallnanopartikeldispersion gemäß Anspruch 1, wobei die Polyalkyleniminkette (a) eine Polyethyleniminkette ist.

3. Metallnanopartikeldispersion gemäß einem der Ansprüche 1 bis 2, wobei die Metallnanopartikel (Y) einen Partikeldurchmesser von 1 bis 50 nm haben.

4. Metallnanopartikeldispersion gemäß Anspruch 1, wobei ein oder mehrere der Metallnanopartikel (Y) in der Dispersion der Polymerverbindung (X) coordiniert sind.

5. Herstellungsverfahren einer Metallnanopartikeldispersion, das umfasst:
Bildung einer Dispersion einer Polymerverbindung (X), die eine Polyalkyleniminkette (a), ein hydrophiles Segment (b) und ein hydrophobes Segment (c) umfasst, wobei die Polymerverbindung (X) eine Struktur hat, in der die Polyalkyleniminkette (a) durch das hydrophile Segment (b) und das hydrophobe Segment (c) gebunden ist, in einem Lösungsmittel; und
Zugeben einer Metallsalz- oder Metallionenlösung zu der Dispersion, um Metallionen zu reduzieren und Metallnanopartikel (Y) zu erhalten, wobei das hydrophile Segment (b) eine Polyoxialkylenkette ist, wobei das hydrophobe Segment (c) ein Rest von mindestens einer Verbindung, ausgewählt aus der Gruppe, bestehend aus Polystyrolen, Poly(meth)acrylsäureestern, Epoxyharzen, Polyurethanen, Polycarbonaten und Polyacylalkyleniminen, die einen hydrophoben Substituenten haben, ist, und wobei die Metallnanopartikel (Y) mindestens einen Typ an Metall, ausgewählt aus der Gruppe, bestehend aus Silber, Gold und Platin, sind.

6. Herstellungsverfahren einer Metallnanopartikeldispersion gemäß Anspruch 5, wobei ein Reduktionsmittel verwendet wird, wenn die Metallionen reduziert werden.

## Revendications

1. Dispersion de nanoparticules métalliques comprenant : une dispersion d'un composé polymère (X), qui comprend une chaîne polyalkylèneimine (a), un segment hydrophile (b) et un segment hydrophobe (c), où le composé polymère (X) a une structure dans laquelle la chaîne polyalkylèneimine (a) est liée par le segment hydrophile (b) et le segment hydrophobe (c), et des nanoparticules métalliques (4), dans laquelle le segment hydrophile (b) est une chaîne polyoxyalkylène, dans laquelle le segment hydrophobe (c) est un résidu d'au moins un composant choisi dans le groupe consistant en les polystyrènes, les poly(esters d'acide (méth)acrylique), les résines époxy, les polyuréthanes, les polycarbonates et les polyacylalkylèneimines ayant un substituant hydrophobe et dans laquelle les nanoparticules métalliques (Y) sont au moins un type de métal choisi dans le groupe consistant en l'argent, l'or et le platine.

2. Dispersion de nanoparticules métalliques selon la revendication 1, dans laquelle la chaîne polyalkylèneimine (a) est une chaîne polyéthylèneimine.

3. Dispersion de nanoparticules métalliques selon l'une quelconque des revendications 1 à 2, dans laquelle les nanoparticules métalliques (Y) ont un diamètre de particule de 1 à 50 nm.

4. Dispersion de nanoparticules métalliques selon la revendication 1, dans laquelle une ou plusieurs des nanoparticules métalliques (Y) sont coordonnées dans la dispersion du composé polymère (X).

5. Procédé de production d'une dispersion de nanoparticules métalliques comprenant :
la formation d'une dispersion d'un composé polymère (X), qui comprend une chaîne polyalkylèneimine (a), un signal hydrophile (b) et un segment hydrophobe (c), où le composé polymère (X) a une structure dans laquelle la chaîne polyalkylèneimine (a) est liée par le segment hydrophile (b) et le segment hydrophobe (c), dans un solvant ; et
l'addition d'un sel de métal ou d'une solution d'ions métalliques à la dispersion afin de réduire les ions métalliques et d'obtenir des nanoparticules métalliques (Y),
dans lequel le segment hydrophile (b) est une chaîne polyoxyalkylène, dans lequel le segment hydrophobe (c) est un résidu d'au moins un composé choisi dans le groupe consistant en les polystyrènes, les poly(esters d'acide (méth)acrylique), les résines époxy, les polyuréthanes, les polycarbonates et les polyacylalkylèneimines ayant un substituant hydrophobe et dans lequel les nanoparticules métalliques (Y) sont au moins un type de métal choisi dans le groupe consistant en l'argent, l'or et le platine.

6. Procédé de production d'une dispersion de nanoparticules métalliques selon la revendication 5, dans lequel un agent réducteur est utilisé lors de la réduction des ions métalliques.
